(19) Europäisches Patentamt
European Patent Office
Office européen des brevets

(11) EP 3 619 051 B1

(12) FASCICULE DE BREVET EUROPEEN

(45) Date de publication et mention de la délivrance du brevet:
**24.02.2021 Bulletin 2021/08**

(21) Numéro de dépôt: **18728214.0**

(22) Date de dépôt: **03.05.2018**

(51) Int Cl.:
***B60C 1/00*** (2006.01) ***C01B 33/12*** (2006.01)
***C08L 9/06*** (2006.01) ***C08L 15/00*** (2006.01)
***C08K 3/36*** (2006.01)

(86) Numéro de dépôt international:
**PCT/FR2018/051099**

(87) Numéro de publication internationale:
**WO 2018/203002 (08.11.2018 Gazette 2018/45)**

# (54) COMPOSITION DE CAOUTCHOUC COMPRENANT AU MOINS UNE SILICE EN TANT QUE CHARGE RENFORÇANTE INORGANIQUE

KAUTSCHUKZUSAMMENSETZUNG MIT MINDESTENS EINEM SILICIUMDIOXID ALS ANORGANISCHER VERSTÄRKUNGSFÜLLSTOFF

RUBBER COMPOSITION COMPRISING AT LEAST ONE SILICA AS INORGANIC REINFORCING FILLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2017 FR 1753968**

(43) Date de publication de la demande:
**11.03.2020 Bulletin 2020/11**

(73) Titulaire: **COMPAGNIE GENERALE DES ETABLISSEMENTS MICHELIN**
**63000 Clermont-Ferrand (FR)**

(72) Inventeurs:
- **PAWLAK, Angélique**
  **63040 CLERMONT-FERRAND CEDEX 9 (FR)**
- **ALLAIN NAJMAN, Emmanuelle**
  **94240 L'Hay Les Roses (FR)**
- **BADAIRE, Stéphane**
  **63040 CLERMONT-FERRAND CEDEX 9 (FR)**
- **FAYOLLE, Caroline**
  **69002 Lyon (FR)**
- **GARBEY, Pascaline**
  **69370 Saint Didier au Mont d'Or (FR)**
- **GUY, Laurent**
  **69580 Sathonay-Camp (FR)**
- **NEVEU, Sylvaine**
  **75005 Paris (FR)**
- **STOCKLOUSER, Fabien**
  **69009 Lyon (FR)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**EP-A1- 0 735 088** **WO-A1-03/016215**
**FR-A1- 2 928 374** **US-A1- 2006 093 541**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 619 051 B1

## Description

Le domaine de l'invention est celui des compositions de caoutchouc renforcées d'une charge inorganique, notamment destinées à la fabrication de pneumatiques ou de produits semi-finis pour pneumatiques, en particulier aux bandes de roulement de ces pneumatiques.

Les compositions de caoutchouc déterminent dans une large mesure les performances routières d'un pneumatique. Initialement du noir de carbone était utilisé dans les compositions de caoutchouc en tant que charge renforçante en vue de limiter l'usure des pneumatiques.

Or, depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Par ailleurs, il est connu dans le domaine du pneumatique que l'amélioration d'une performance s'effectue souvent au détriment d'une autre. C'est le cas pour la résistance au roulement et de la résistance à l'usure ; ces performances étant antinomiques.

Les manufacturiers de pneumatiques recherchent donc un compromis entre ces deux performances.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

Des bandes de roulement chargées de telles silices hautement dispersibles (notées « HD » ou « HDS » pour « highly dispersible » ou « highly dispersible silica »), utilisables dans les pneumatiques à basse résistance au roulement parfois qualifiés de « Pneus Verts » pour l'économie d'énergie offerte à l'usager (« Green Tyre concept »), ont été abondamment décrites. On se reportera notamment aux demandes de brevet EP0501227, EP0692492, EP0692493, EP0735088, EP0767206, EP0786493, EP0881252, WO99/02590, WO99/02601, WO99/02602, WO99/06480, WO00/05300 et WO00/05301. Ces documents de l'art antérieur enseignent l'utilisation de silices du type HD présentant une surface spécifique comprise entre 100 et 250 $m^2/g$.

Parmi ces silices HD, on utilise préférentiellement des silices à haute surface spécifique. On entend généralement par haute surface spécifique des surfaces d'au moins 130 $m^2/g$, voir supérieure ou égale à 150 $m^2/g$. L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi, il apparaît avantageux d'utiliser dans des compositions de caoutchouc pour bandes de roulement de pneumatiques des silices à haute surface spécifique pour notamment améliorer la résistance à l'usure de ces bandes de roulement. À titre d'exemple de silice présentant une surface spécifique d'environ 160 $m^2/g$ on peut citer la silice Zeosil® 1165MP commercialisée par la Solvay, qui fait référence dans le domaine des « Pneus Verts ».

Toutefois, il est connu que l'augmentation de la surface spécifique d'une silice se fait au détriment des propriétés hystérétiques des compositions de caoutchouc, ce qui détériore la résistance au roulement.

Il demeure toujours intéressant pour les manufacturiers de pneumatiques de continuer à améliorer le compromis de performances résistance au roulement/résistance à l'usure en modifiant notamment de façon spécifique la morphologie d'une silice.

Dans ce but, la Demanderesse a décrit dans sa demande de brevet WO 03/016387 une famille de silices hautement dispersibles et présentant une surface spécifique plus élevée que celles des silices jusqu'à présent connues. Ces silices confèrent aux compositions qui les contiennent une amélioration significative de la résistance à l'usure sans dégrader les autres propriétés de ces compositions et notamment la résistance au roulement.

Poursuivant ses recherches, la Demanderesse a découvert de manière surprenante qu'une silice présentant une morphologie spécifique utilisée à titre de charge renforçante inorganique dans une composition de caoutchouc permet d'atteindre un excellent compromis résistance au roulement/ résistance à l'usure. Ce compromis est supérieur à celui offert par les silices à haute surface spécifique existantes et usuellement utilisées dans les bandes de roulement des « Pneus Verts ».

En conséquence, un premier objet de l'invention concerne une composition de caoutchouc à base d'au moins un élastomère, une charge renforçante inorganique, un agent de couplage de l'élastomère avec la charge renforçante inorganique, et un système de réticulation ; ladite charge renforçante inorganique comprenant au moins une silice S présentant :

- une surface spécifique CTAB $S_{CTAB}$ comprise dans un domaine allant de 40 à 300 $m^2/g$;
- une différence entre la surface spécifique BET $S_{BET}$ et la surface spécifique CTAB $S_{CTAB}$ supérieure ou égale à 35 $m^2/g$ ;
- un taux d'aluminium $W_{A1}$ compris dans un domaine allant de 0,5 à 7,0 % en poids par rapport au poids de la silice S;

- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 253 \qquad (II).$$

Un autre objet de la présente invention concerne un procédé de préparation d'une composition de caoutchouc telle que définie ci-dessus, ledit procédé comprenant les étapes suivantes:

- on met en contact au moins un élastomère, au moins une charge renforçante inorganique, au moins un agent de couplage de l'élastomère avec la charge renforçante inorganique; ladite charge renforçante inorganique comprenant au moins une silice S présentant :
  - une surface spécifique CTAB $S_{CTAB}$ comprise dans un domaine allant de 40 à 300 $m^2/g$ ;
  - une différence entre la surface spécifique BET $S_{BET}$ et la surface spécifique CTAB $S_{CTAB}$ supérieure ou égale à 35 $m^2/g$ ;
  - un taux d'aluminium $W_{A1}$ compris dans un domaine allant de 0,5 à 7,0 % en poids par rapport au poids de la silice S;
  - une largeur de la distribution de taille d'agrégats Ld, mesurée par sédimentation centrifuge, supérieure ou égale à 1,5 ; et
  - un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

  dans laquelle :

  [d50] est la valeur numérique de d50 exprimé en nm;
  [$S_{CTAB}$] est la valeur numérique de $S_{CTAB}$ exprimée en $m^2/g$ ;
  [$W_{A1}$] est la valeur numérique de $W_{A1}$ exprimé en % en poids par rapport au poids de la silice S; et
  ladite grandeur A satisfait la relation (II) :

$$A \geq 253 \qquad (II);$$

- on malaxe thermomécaniquement le tout en une ou plusieurs fois, jusqu'à atteindre une température maximale comprise entre 110°C et 190°C ;
- on refroidit le mélange de l'étape précédente à une température inférieure à 100°C,
- on incorpore au mélange refroidi de l'étape précédente un système de réticulation,
- on malaxe le mélange comprenant le système de réticulation jusqu'à une température maximale inférieure à 110°C.

Un autre objet de l'invention concerne un article semi-fini notamment pour pneumatique comprenant au moins

une composition telle que définie ci-dessus ou susceptible d'être obtenue selon le procédé décrit ci-dessus. Préférentiellement, cet article semi-fini est une bande de roulement notamment pour pneumatique.

Un autre objet de la présente invention est un pneumatique comprenant au moins une composition telle que définie ci-dessus ou susceptible d'être obtenue selon le procédé décrit ci-dessus.

Un autre objet de la présente invention est un pneumatique comprenant au moins un article semi-fini tel que défini ci-dessus.

## I - DESCRIPTION DÉTAILLÉE DE L'INVENTION

### I.1 Mesures et Tests Utilisés

☐ Caractérisation des silices

Les silices sont caractérisées comme indiqué ci-après.

- Mesure de la surface spécifique CTAB ($S_{CTAB}$)

✓ *Principe de la mesure*

Les valeurs de surface spécifique CTAB ($S_{CTAB}$) ont été déterminées selon un procédé interne déduit de la norme NF ISO 5794-1, annexe G de juin 2010. Le procédé est basé sur l'adsorption du CTAB (bromure de N-hexadécyl-N,N,N-triméthylammonium) sur la surface « externe » de la silice.

On laisse le CTAB s'adsorber sur la silice en suspension aqueuse sous agitation magnétique. Après séparation de la phase liquide à l'aide d'une centrifugeuse, le CTAB en excès non adsorbé est déterminé par titrage avec du sel sodique de bis(2-éthylhexyl)sulfosuccinate (appelé « OT » dans la suite de la description) à l'aide d'un titroprocesseur, le point de titrage étant donné par le maximum de turbidité de la solution et déterminé par phototrode.

✓ *Appareils utilisés*

- Balance de précision au 1/10$^{ème}$ de mg Mettler Toledo AS205 ;
- Agitateur magnétique pouvant tourner à une vitesse de 1100 tours/minute ;
- pH mètre de type seven easy, Mettler Toledo équipé d'une électrode de pH type InLab Expert Pro, Metller Toledo ;
- Appareil de titration automatique, de type T70, Mettler Toledo, équipé d'une phototrode DP5 réglé sur 555 nm ;
- Chronomètre dont la caractéristique d'usage est la seconde ;
- Bécher pour titration, type béchers plastique de 125 mL, Mettler Toledo ;
- Eprouvette de 50 et de 500 mL ;
- Centrifugeuse pouvant tourner à une vitesse de 8000 tours/minute ;
- Mortier muni d'un pilon ;
- Tubes à centrifuger adaptés à la centrifugeuse avec bouchon à vis de capacité 50 mL ;
- Fioles jaugées de capacité 1 litre de classe A ;
- Barreaux aimantés enrobés de Téflon ;
- Pipettes jaugés de précision de 10 mL et 20 mL de classe $A^+$ à deux traits ;
- Burette de précision 50 ml de classe A ;
- Flacon à tare, forme haute en verre borosilicaté muni de son couvercle de capacité 40 ml, par exemple ∅35, H 70 mm ;
- Flacon à tare forme basse de 50 mm de diamètre, avec couvercle coiffant ;
- Etuve à circulation d'air naturelle, Memmert UM100 ;
- Dessiccateur ;
- Tamis de 150$\mu$m et support de tamis.

✓ *Réactifs*

Tous les réactifs doivent être de qualité analytique reconnue. L'eau utilisée doit être de l'eau déminéralisée.

- Carbonate de sodium ($Na_2CO_3$) de pureté supérieure à 99% ;
- Hydrogénocarbonate de sodium ($NaHCO_3$) de pureté supérieure à 99% ;

- Bromure d'héxadécyl triméthyl ammonium (CTAB; $C_{19}H_{42}BrN$) de pureté supérieure à 99% ;
- Di(2-éthylhexyl)sulfosuccinate de sodium (OT; $C_{20}H_{37}O_7SNa$) de pureté supérieure à 99% ;
- Eau déminéralisée.

✔ *Préparation des solutions*

o Préparation de la solution tampon de pH 9,54 *c($HCO_3^-$/$CO_3^{2-}$) = 0,054 mol/L*
Dans une fiole jaugée d'1 litre contenant 500 mL d'eau déminéralisée, on ajoute :

4,5470 ± 0,003 g de carbonate de sodium ($Na_2CO_3$) ;

9,3585 ± 0,003 g d'hydrogénocarbonate de sodium ($NaHCO_3$).

Après dissolution des solides, on remplit la fiole jaugée jusqu'au trait de jauge avec de l'eau déminéralisée et on homogénéise sous agitation magnétique pendant 10 minutes à 250 tr/min.
On vérifier le pH de la solution à l'aide du pH-mètre, il doit être de 9,54 ± 0,1.

◦ Solution de bromure d'hexadécyltriméthylammonium (CTAB), c(CTAB) = 0,015 mol/L

Dans une fiole jaugée d'1 litre contenant 350 mL de la solution tampon et environ 500 mL d'eau déminéralisée, on dissout 5,50 ± 0,005 g de CTAB. On complète au trait de jauge avec de l'eau déminéralisée.
On homogénéise sous agitation magnétique pendant environ 10 heures à la vitesse de 250 tr/min.
On vérifier le pH de la solution à l'aide du pH-mètre, il doit être de 9,6 ± 0,1.
La température de cette solution ne devra à aucun moment descendre en dessous de 22°C, température de recristallisation.
La solution est utilisable 24 heures après sa préparation. La date limite d'utilisation de cette solution est de 15 jours.
◦ Solution de di(2-éthylhexyl)sulfosuccinate de sodium (OT), c(OT) = 0,00389 mol/L
Dans une fiole jaugée d'1 litre contenant 500 mL d'eau déminéralisée, on dissout 1,730 ± 0,005 g d'OT, on complète jusqu'au trait de jauge avec de l'eau déminéralisée et on agite avec un agitateur magnétique pendant 10 h à 250 tr/min.
Cette solution est à utiliser 12 jours après sa préparation. La date limite d'utilisation de cette solution est de 2 mois. Le réactif solide une fois ouvert doit être conservé dans un dessiccateur

✔ *Conditions d'essai*

L'essai doit être effectué à une température de 24°C ± 2°C.
Il est recommandé que les réactifs et les appareils soient mis à la température d'équilibre de la pièce.
La solution de CTAB ne doit pas être conservée à une température inférieure à 22°C. Cela provoque une lente recristallisation.
Avant toute analyse, on homogénéise les réactifs sous agitation magnétique pendant 15 minutes à 250tr/min.
Avant toute analyse, les circuits des burettes doivent être purgés et l'absence de bulles d'air dans les circuits doit être vérifiée.
Avant toute analyse, la phototrode est rincée avec de l'éthanol, puis avec de l'eau déminéralisée, puis conditionnée pendant 30 minutes dans un bécher contenant 50 mL d'eau déminéralisée.
Le potentiel de l'eau déminéralisée dans la phototrode doit être de 1000 ± 5 mV ce qui correspond à 100% de transmission.

✔ *Détermination de l'essai à blanc*

L'essai à blanc permet de déterminer la quantité d'OT nécessaire à la titration de 10 mL de solution de CTAB.
On prélève 10,0 mL de solution de CTAB que l'on transvase dans un bécher pour titration. A l'aide de l'éprouvette, on ajoute 50 mL d'eau déminéralisée.
Le dosage est réalisé avec les paramètres suivants :

- Valeur point final : 200 mV ;
- Taux max : 10 mL/min ;
- Taux min : 10 µL/min.

On effectue deux essais.
On note $V_2$ et $V_3$ les volumes en ml de solution d'OT déterminés lors des deux essais à blanc.
On calcule le volume moyen $V_4$ de la façon suivante :

$$V_4 = \frac{V_2 + V_3}{2}$$

✓*Adsorption du CTAB par la silice*

L'échantillon de silice est réduit en poudre à l'aide d'un mortier et d'un pilon puis est passé au tamis de 150 µm.
On pèse 0,35 ± 0,005g de l'échantillon de silice tamisé, on note P1 cette masse de prise d'essai.
On introduire avec précaution la prise d'essai dans un flacon à tare et on introduit un barreau aimanté dans le flacon à tare.
On introduit ensuite 30,0 mL de la solution de CTAB et on met sous agitation magnétique à 1100 tours/minute pendant 40 minutes.

✓*Séparation de la silice*

Immédiatement après adsorption de la silice, on transvase toute la suspension dans un tube à centrifuger.
On sépare la silice de la suspension par centrifugation à 8000 tours/minute pendant 30 minutes.

✓ *Dosage du CTAB après adsorption*

A l'aide d'une pipette, on prélève directement dans le tube à centrifuger 10,0 mL de la solution de CTAB surnageante en prenant soin de ne pas entraîner de silice.
On transvase dans un bécher pour titration et à l'aide de l'éprouvette, on ajoute 50 mL d'eau déminéralisée. Le dosage est réalisé avec les paramètres suivants :

- Valeur point final : 250 mV ;
- Taux max : 10 mL/min ;
- Taux min : 5 µL/min.

Soit $V_1$ le volume d'OT consommé.

✓ *Teneur en humidité de la silice*

La teneur en humidité (% $H_2O$) pour chaque échantillon de silice est déterminée par perte de poids de l'échantillon après étuvage à 105°C pendant 2 heures. Pour cela on pèse sur la balance de précision la masse d'un flacon à tare et d'un couvercle coiffant, on note cette masse $m_0$; on pèse ensuite rapidement environ exactement 2 g de l'échantillon de silice à tester. On dispose le couvercle sur le flacon une fois la silice pesée et on note la masse $m_1$ de l'ensemble flacon à tare, couvercle et échantillon. On ôte ensuite le couvercle et on introduit le flacon à tare contenant la silice dans l'étuve à circulation d'air naturelle régulée à 105 ± 5°C pendant 2 heures, l'étuve étant chauffée au préalable à la température prescrite.
L'ensemble flacon à tare et échantillon est sorti de l'étuve, on replace le couvercle sur le flacon et on dispose l'ensemble dans le dessiccateur pour refroidissement jusqu'à retour à température ambiante. On pèse l'ensemble et on note la masse $m_2$.
La teneur en humidité, exprimée en pourcentage massique, est alors obtenue selon la formule suivante :

$$\%\ H_2O = \frac{(m_1 - m_0) - (m_2 - m_0)}{(m_1 - m_0)} \times 100$$

$m_0$ : masse du flacon à tare et du couvercle en grammes

$m_1$ : masse de l'ensemble flacon à tare, couvercle et échantillon de silice avant étuvage en grammes
$m_2$ : masse de l'ensemble flacon à tare, couvercle et échantillon de silice après étuvage en grammes

✓ *Expression des résultats*

L'indice d'adsorption de CTAB est donné par la relation suivante :

$$Indice\ d'adsorption\ de\ CTAB\ (m^2/g) = \frac{V_4 - V_1}{V_4} \times \frac{(0{,}165 \times 578{,}116)}{P1\,\frac{(100 - \%\mathrm{H_2O})}{100}}$$

où :

| | |
|---|---|
| 0,165 g | = masse de CTAB contenue dans 30,0 mL de solution ; |
| $V_4$ en ml | = volume moyen de solution d'OT versé pour l'essai à blanc ; |
| $V_1$ en ml | = volume de solution d'OT versé pour le dosage de l'essai ; |
| P1 en g | = masse de prise d'essai brute ; |
| $\%H_2O$ | = teneur en humidité de la silice. |

• Mesure de la surface spécifique BET ($S_{BET}$)

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2].

• Mesure du taux d'aluminium ($W_{A1}$)

Le taux d'Al (aussi noté $W_{A1}$) est le taux de l'aluminium, c'est-à-dire de l'élément chimique métallique. Il est déterminé par spectrométrie d'émission atomique couplée à un plasma induit (ou ICP-AES pour Inductively Coupled Plasma Atomic Emission Spectroscopy).

✓ *Appareillage*

- Balance de précision d'échelon 0,1 mg,
- Entonnoirs,
- Fioles jaugées de classe A de 100 mL,
- Fioles jaugées de classe A de 250 mL,
- Capsules de platine
- Micropipette étalonnée à volume variable 0,1-1 mL (ex : Eppendorf),
- Micropipette étalonnée à volume variable 0,5-5 mL (ex : Eppendorf),
- Filtres à seringue en acétate de cellulose de diamètre de pores 0,45 $\mu$m,
- Piluliers pour passeur de 20 mL,
- Spectromètre ICP (ex : Jobin Yvon modèle Activa M),
- Bain de sable.

✓ *Réactifs*

- Eau ultrapure
- Acide chlorhydrique concentré (ex : VWR réf : 20252.290)

d=1,18

% HCl=37

- Acide sulfurique concentré (ex : VWR réf : 1.00731.1000)

d=1,84
% $H_2SO_4$=95-97

- Acide fluorhydrique concentré (ex : VWR ref : 20307.290)

d=1,13
% HF=40

- Solution étalon d'aluminium à 1 g/L (VWR ref 1.19770.0500)

✔ *Mode opératoire*

Préparation de l'échantillon de silice à tester :

- Peser environ précisément 100 mg de silice à tester dans une capsule en platine ;
- Ajouter quelques millilitres d'eau déminéralisée et 3 gouttes d'acide sulfurique concentré ;
- Ajouter 10 mL d'acide fluorhydrique concentré ;
- Faire évaporer à sec sur bain de sable ;
- Ajouter de nouveau 10 mL d'acide fluorhydrique, faire évaporer à sec ;
- Répéter cette opération une troisième fois ;
- Laisser refroidir la capsule ;
- Reprendre l'échantillon dans 10 mL d'acide chlorhydrique concentré, pendant quelques minutes ;
- Une fois l'acide refroidit, transvaser l'échantillon dans une fiole de 200 mL contenant de l'eau déminéralisée et compléter jusqu'au trait de jauge avec de l'eau déminéralisée.

Préparation du blanc :

- Dans une capsule en platine, ajouter quelques millilitres d'eau déminéralisée et 3 gouttes d'acide sulfurique concentré ;
- Ajouter 10 mL d'acide fluorhydrique concentré ;
- Faire évaporer à sec sur bain de sable ;
- Ajouter de nouveau 10 mL d'acide fluorhydrique, faire évaporer à sec ;
- Répéter cette opération une troisième fois ;
- Laisser refroidir la capsule ;
- Reprendre l'échantillon dans 10 mL d'acide chlorhydrique concentré, pendant quelques minutes ;
- Une fois l'acide refroidit, transvaser l'échantillon dans une fiole de 200 mL contenant de l'eau déminéralisée et compléter jusqu'au trait de jauge avec de l'eau déminéralisée.

Préparation de la gamme d'étalonnage :

La gamme d'étalonnage est composée de 5 étalons préparés dans des fioles de 100 mL, à partir d'une solution commerciale d'aluminium à 1000 mg/L, selon le tableau I suivant :

Tableau I

| N° Etalon | Et 0 | Et 1 | Et 2 | Et 3 | Et 4 |
|---|---|---|---|---|---|
| Concentration Al (mg/L) | 0 | 2,5 | 5 | 7,5 | 10 |
| Volume solution Al 1000 mg/L ($\mu$L) | 0 | 250 | 500 | 750 | 1000 |
| Acide chlorhydrique concentré (mL) | 5 | 5 | 5 | 5 | 5 |
| Et= Étalon | | | | | |

Préparation du témoin de validation

Le témoin de validation est préparé de la même façon que l'étalon Et 2 de la gamme d'étalonnage en utilisant une solution d'aluminium à 1000 mg/L dans une fiole de 100 ml, selon le tableau II suivant.

Tableau II

| | Témoin de validation |
|---|---|
| Concentration Al (mg/L) | 5 |
| Volume solution Al 1000 mg/L (μL) | 500 |
| Acide chlorhydrique concentré (mL) | 5 |

Dosage par ICP-AES :

Analyser les solutions obtenues par ICP-AES (Cf. Paramètres Instrumentaux).

Raies utilisées :

ICP-AES Jobin Yvon Activa

| | |
|---|---|
| *Aluminium* | $\lambda$ = 394.401 nm<br>$\lambda$ = 396.152 nm |

Séquence d'analyse :

1- Etalonnage ;

2- Témoin de validation ;

3- Blanc ;

4- Echantillons.

Les paramètres instrumentaux ICP-AES Jobin Yvon Activa sont présentés dans le tableau III suivant :

Tableau III

| | |
|---|---|
| *Puissance du Plasma* | 1100 Watts |
| *Vitesse de la pompe* | 20 tours/min |
| *Débit argon plasmagène* | P1 L/min |
| *Débit gaz de gainage* | G1 L/min |
| *Débit de gaz auxiliaire* | 0 L/min |
| *Débit de nébulisation* | 0,02 L/min |
| *Pression de nébulisation* | *1 bar* |
| *Temps de rinçage* | *30 sec* |
| *Temps de transfert* | *60 sec* |
| *Temps de stabilisation* | *25 sec* |

✓ *Résultats*

Le taux d'aluminium ($W_{A1}$) de la silice testée est donné par la relation suivante (IV):

$$\% \text{ Al} = \frac{(C-Cb)*V*100}{PE} \qquad \text{IV}$$

avec :

C : concentration en mg/L d'aluminium dans l'échantillon ;
Cb : concentration en mg/L d'aluminium dans le blanc ;
V : volume de la fiole jaugée en L (dans notre cas 0,200 L) ;
PE : prise d'essai en mg de l'échantillon ;

• Mesure des paramètres d16, d50, d84 et Ld

On mesure les valeurs d16, d50, d84 et Ld au moyen d'un photosédimentomètre centrifuge de type « CPS DC24000 UHR », qui est commercialisé par la société CPS Instruments. Cet appareil est muni d'un logiciel d'exploitation fourni avec l'appareil (logiciel d'exploitation version 11g).

Pour les besoins des mesures, on utilise également le matériel et les produits suivants :

- Système à ultrasons : générateur de 1500 watts de type Sonics Vibracell VCF1500 équipé d'un convecteur de type Sonics Vibracell CV154, d'un booster de type Sonics Vibracell BHN15GD (x1,5) et d'une sonde de type Sonics Vibracell 207-10 de 19 mm avec embout interchangeable de 19 mm de type Sonics Vibracell 630-0407;
- Balance analytique d'une précision de 0,1 mg (par exemple le modèle Mettler Toledo XP504) ;
- Seringues : 1,0 mL et 2,0 mL avec des aiguilles d'un diamètre de 0,81 mm ;
- Bécher en verre de forme haute de 50 mL (SCHOTT DURAN : diamètre 38 mm, hauteur 70 mm); agitateur magnétique avec une barre d'agitation de 2 cm ;
- Récipient pour bain de glace type cristallisoir ;
- Produits chimiques : eau déionisée ; éthanol 96% ; saccharose 99% (Numéro CAS n°57-50-1 ; aussi appelé sucrose en anglais); dodécane, tous fournis par Sigma; étalon de calibration en PVC fourni par CPS Instrument, Inc. le maximum du pic de l'étalon de calibration utilisé doit être situé entre 200 et 600 nm, par exemple 239 nm.

✓ Pré-régalages et configuration de l'instrument

Pour les mesures, les paramètres, selon le tableau IV, sont entrés dans le logiciel de l'instrument. Les données relatives à l'étalon de calibration en PVC sont fournies par le fournisseur dudit étalon.

Tableau IV :

| **Sample Parameters** | | |
|---|---|---|
| Max. Diameter. | μm | 0,79 |
| Min. Diameter. | μm | 0,02 |
| Particle Density | $g/cm^3$ | 2,11 |
| Particle Refractive index | | 1,46 |
| Particle absorption | | 0,001 |

(suite)

| Sample Parameters | | |
|---|---|---|
| Non-sphericity factor | | 1 |
| **Calibration Standard Parameters** | | |
| Peak diameter | µm | 0,239 |
| Half height peak width | µm | 0,027 |
| Particle density | $g/cm^3$ | 1,385 |
| **Fluid Parameters** | | |
| Fluid density | $g/cm^3$ | 1,051 |
| Fluid refractive index | | 1,3612 |
| Fluid viscosity | cps | 1,28 |
| **Configuration of the system** | | |
| Wavelength | nm | 405 |
| cps = centipoise | | |

Les paramètres suivants d'option de traitement sont établis selon le tableau V suivant:

Tableau V

| | |
|---|---|
| Force baseline | Yes |
| Correct for Non-Strokes Fluids: | No |
| Extra Software Noise filtering : | No |
| Baseline Drift Display : | Show |
| Calibration method : | External |
| Sample per calibration : | 1 |

Toutes les autres options du logiciel sont laissées telles qu'établies par défaut par le fabricant de l'instrument.

✓ Préparation du gradient de sédimentation

Le disque centrifuge est mis en rotation à 24 000 tr/min pendant 30 min. Le gradient de densité de solution de saccharose est préparé de la manière suivante : Dans un bécher de 50 mL, on prépare une solution aqueuse à 24 % en masse de saccharose. Dans un second bécher de 50 mL, on prépare une solution aqueuse à 8 % en masse de saccharose. Une fois ces 2 solutions homogénéisées séparément, on effectue des prélèvements dans chacune de ces solutions à l'aide d'une seringue de 2 mL que l'on injecte dans le disque en rotation selon l'ordre suivant :

- Prélèvement 1 : 1,8 mL de la solution à 24% ;
- Prélèvement 2 : 1,6 mL de la solution à 24% + 0,2 mL de la solution à 8% ;
- Prélèvement 3 : 1,4 mL de la solution à 24% + 0,4 mL de la solution à 8% ;
- Prélèvement 4 : 1,2 mL de la solution à 24% + 0,6 mL de la solution à 8% ;
- Prélèvement 5 : 1,0 mL de la solution à 24% + 0,8 mL de la solution à 8% ;
- Prélèvement 6 : 0,8 mL de la solution à 24% + 1,0 mL de la solution à 8% ;
- Prélèvement 7 : 0,6 mL de la solution à 24% + 1,2 mL de la solution à 8% ;
- Prélèvement 8 : 0,4 mL de la solution à 24% + 1,4 mL de la solution à 8% ;
- Prélèvement 9 : 0,2 mL de la solution à 24% + 1,6 mL de la solution à 8% ;
- Prélèvement 10 : 1,8 mL de la solution à 8%.

Avant chaque injection dans le disque, on homogénéise les 2 solutions dans la seringue en aspirant environ 0,2 mL d'air suivi d'une brève agitation manuelle de quelques secondes, en s'assurant de ne pas perdre de liquide.

Ces injections, dont le volume total est de 18 mL, ont pour but de créer un gradient de densité, utile pour éliminer certaines instabilités pouvant apparaître lors de l'injection de l'échantillon à mesurer. Pour protéger ce gradient de l'évaporation, on ajoute 1 mL de dodécane dans le disque en rotation à l'aide d'une seringue de 2 mL. Le disque est ensuite laissé en rotation à 24 000 rpm pendant 60 min avant toute première mesure (rpm = rotations par minute).

✓ Préparation de l'échantillon de silice à analyser

On pèse 3,2 g de silice dans un bécher en verre de forme haute de 50 mL (SCHOTT DURAN : diamètre 38 mm, hauteur 70 mm) et on ajoute 40 mL d'eau déionisée. La suspension est placée sous agitation magnétique avec un barreau aimanté de 2 cm à 300 tr/min (tr/min=tour par minute) pendant 20 sec minimum puis on retire le barreau aimanté et on place le bécher dans un cristallisoir rempli d'un bain de glace. On plonge ensuite la sonde à ultra-sons dans le bécher, l'extrémité de la sonde se situant à 1 cm sous l'interface air-liquide. Il convient de veiller à ce que l'embout interchangeable transmettant les ultrasons à la suspension présente un état d'usure acceptable avant de démarrer le générateur. De manière connue pour l'homme du métier, on considère usuellement comme état d'usure acceptable un état de surface ne présentant pas de rugosité appréciable visuellement. On peut prendre, par exemple, comme référence d'état d'usure inacceptable le cliché de droite sur la figure 3 page 14 publié dans « Préparation of Nanoparticle Dispersions from Powdered Material Using Ultrasonic Disruption, version 1.1, [J. S. Taurozzi, V. A. Hackley, M. R. Wiesner], National Institute of Standards and Technology Special Publication 1200-2, June 2012 » (CODEN NSPUE, publication disponible sous l'identifiant digital dx.doi.org/10.6028/NIST.SP.1200-2). Le générateur de la sonde est réglé à 60% de sa puissance maximale et la suspension de silice est soumise aux ultra-sons pendant 8 min. À la fin du traitement par ultrasons, la suspension est placée de nouveau sous agitation magnétique. Le prélèvement de l'échantillon est réalisé sous agitation.

✓ Analyse

Avant chaque injection de l'échantillon à mesurer, on injecte dans le disque 100 μL de la suspension contenant les particules de l'étalon en PVC fourni par CPS Instruments et dont les caractéristiques ont été préalablement enregistrées dans le logiciel. Il convient de démarrer la mesure dans le logiciel de façon simultanée à cette première injection, et d'attendre la confirmation de l'appareil avant de pouvoir injecter 100 μL de la suspension de silice préalablement sonifiée, en s'assurant à nouveau que la mesure est lancée de façon simultanée à l'injection. Ces injections sont réalisées à l'aide de seringues de 1 mL.

A l'issue de la mesure, qui est atteinte au bout du temps nécessaire pour faire sédimenter toutes les particules de plus petit diamètre (configuré dans le logiciel à 0,02 μm), le logiciel fournit les proportions relatives en masse pour chaque classe de diamètre mesuré. Cette courbe ainsi obtenue est appelée distribution de taille d'agrégats.

L'intégration de la distribution de taille d'agrégats en fonction du diamètre permet d'obtenir une distribution dite « cumulée », c'est-à-dire la masse totale d'agrégats comprise entre le diamètre minimum mesuré et un diamètre d'intérêt.

✓ Résultats

Les valeurs de d50, d16, d84 et Ld sont issues des distributions cumulées et sont calculées de la façon suivante, sur la base d'une échelle linéaire :

- d50 est le diamètre en-dessous et au-dessus duquel on retrouve 50% de la population d'agrégats en masse. Le d50 est appelé diamètre médian des agrégats de silice. Il est exprimé en nm.
- d84 est le diamètre en-dessous duquel on retrouve 84% de la population d'agrégats en masse. Il est exprimé en nm.
- d16 est le diamètre en-dessous duquel on retrouve 16% de la population d'agrégats en masse. Il est exprimé en nm.
- Ld : il représente la largeur de la distribution de taille d'agrégats. Il est calculé suivant l'équation Ld = (d84-d16)/d50. Ld est un nombre adimensionnel.

☐ <u>Caractérisation des compositions de caoutchouc</u>

Les compositions de caoutchouc sont caractérisées, après cuisson, comme indiqué ci-après.

• Propriétés dynamiques

La propriété dynamique tan(δ) est mesurée sur un viscoanalyseur (Metravib V A4000), selon la norme ASTM D 5992 - 96.

*Mesure à une température de 23°C :*

On enregistre la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10 Hz, à 23°C selon la norme ASTM D 5992 - 96. On effectue un balayage en amplitude de déformation crête à crête de 0,1 à 100 % (cycle aller) puis de 100 à 0,1 % (cycle retour). Le résultat exploité est le facteur de perte (tan(δ)). Pour le cycle retour, on indique la valeur maximale de tan(δ) observée (tan(δ)max à 23°C).

Les résultats sont indiqués en base 100 ; la valeur arbitraire 100 étant attribuée au témoin pour calculer et comparer ensuite $\tan(\delta)_{max}$ à 23°C des différents échantillons testés. La valeur en base 100 pour l'échantillon à tester est calculée selon l'opération : (valeur de tan(δ)max à 23°C de l'échantillon à tester/valeur de tan(δ) max à 23°C du témoin) x 100. De cette façon, un résultat inférieur à 100 indique une diminution de l'hystérèse (donc une amélioration des propriétés hystérétiques) qui correspond à une amélioration de la performance de résistance au roulement.

• Résistance à l'abrasion

La résistance à l'abrasion est mesurée selon la norme NF ISO 4649 de novembre 2010 qui consiste à déterminer la perte en volume d'un échantillon après déplacement de 40 mètres linéaires sur du papier abrasif normé.

Plus particulièrement, la détermination de la perte de volume par abrasion est effectuée selon les indications de la norme NF ISO 4649 de novembre 2010 (méthode B), en utilisant un abrasimètre où l'éprouvette cylindrique est soumise à l'action d'une toile abrasive de grains P60 et fixée sur la surface d'un tambour tournant sous une pression de contact de 5 N (N=Newton) et pour une course de 40 m. On mesure une perte de masse de l'échantillon et on calcule la perte de volume d'après la masse volumique (p) du matériau constituant l'éprouvette. La masse volumique (p) du matériau constituant l'éprouvette est obtenue classiquement sur la base des fractions massiques de chaque constituant du matériau et de leur masse volumique (p) respective.

Les résultats sont indiqués en base 100. La valeur arbitraire 100 étant attribuée au témoin pour calculer et comparer ensuite le volume de perte de substance des différents échantillons testés. La valeur en base 100 pour l'échantillon à tester est calculée selon l'opération : (valeur du volume de perte de substance de l'échantillon à tester / valeur du volume de perte de substance du témoin) x 100. De cette façon, un résultat inférieur à 100 indiquera une diminution de la perte en volume et donc une amélioration de la résistance à l'abrasion, qui correspond à une amélioration de la performance de résistance à l'usure. Inversement, un résultat supérieur à 100 indiquera une augmentation de la perte en volume et donc une diminution de la résistance à l'abrasion, qui correspond à une baisse de la performance de résistance à l'usure.

☐ Caractérisation des autres constituants de la composition

• *Température de transition vitreuse Tg*

La température de transition vitreuse Tg est mesurée de manière connue par DSC (Differential Scanning Calorimetry), selon la norme ASTM D3418 de 1999.

• *Microstructure des polymères*

La spectroscopie proche infrarouge (NIR) est utilisée pour déterminer quantitativement le taux massique de styrène dans l'élastomère ainsi que sa microstructure (répartition relative des unités butadiène 1,2-vinyl, 1,4-trans et 1,4 cis). Le principe de la méthode repose sur la loi de Beer-Lambert généralisée à un système multi-composants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

## 1.2 Réalisation de l'invention

Les compositions de caoutchouc, notamment destinées à la fabrication de pneumatiques ou de produits semi-finis pour pneumatiques, conformes à l'invention sont à base d'au moins un élastomère, une charge renforçante inorganique, un agent de couplage de l'élastomère avec la charge renforçante inorganique, et un système de réticulation ; ladite charge renforçante inorganique comprenant au moins une silice S présentant :

- une surface spécifique CTAB $S_{CTAB}$ comprise dans un domaine allant de 40 à 300 $m^2/g$;
- une différence entre la surface spécifique BET $S_{BET}$ et la surface spécifique CTAB $S_{CTAB}$ supérieure ou égale à 35 $m^2/g$ ;
- un taux d'aluminium $W_{A1}$ compris dans un domaine allant de 0,5 à 7,0 % en poids par rapport au poids de la silice S;
- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 253 \qquad (II).$$

Par l'expression composition « à base de », il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par « agrégat de silice», on entend au sens de la présente invention de manière connue un assemblage de particules primaires indivisibles (i.e. qui ne peuvent être coupées, divisées, partagées) produit lors de la synthèse de la silice. Un agrégat de silice représente la plus petite unité dispersible en mélange.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties en poids d'élastomères (du total des élastomères si plusieurs élastomères sont présents) ou caoutchouc présents dans la composition de caoutchouc.

Dans la suite de la présente demande, les termes « silice » et « silice précipitée » sont synonymes.

Afin d'éviter toute ambiguïté, le symbole « x » utilisé dans les équations, notamment dans l'équation (I) représente le signe multiplié. Ainsi l'expression « axb » signifie « a » multiplié par « b ».

Dans le cadre de l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

☐ Elastomère

Les compositions de caoutchouc conformes à l'invention comprennent au moins un élastomère, c'est-à-dire un élastomère ou un mélange de plusieurs d'élastomères. Les élastomères sont des polymères bien connus de l'homme du métier.

Préférentiellement, l'élastomère est un élastomère diénique.

Plus préférentiellement, l'élastomère est un élastomère diénique synthétique.

Par élastomère (ou « caoutchouc », les deux termes étant considérés comme synonymes) du type « diénique », on rappelle ici que doit être compris de manière connue un (on entend un ou plusieurs) élastomère issu au moins en partie (c'est-à-dire un homopolymère ou un copolymère) de monomère(s) diène(s) (i.e., porteur(s) de deux doubles

liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux molaire de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux molaire de motifs d'origine diénique faible ou très faible, toujours inférieur à 15% (% en moles)). Dans la catégorie des élastomères diéniques « essentiellement insaturés », on entend en particulier par élastomère diénique « fortement insaturé » un élastomère diénique ayant un taux molaire de motifs d'origine diénique (diènes conjugués) qui est supérieur à 50% (% en moles).

Ces définitions étant données, on entend plus particulièrement par élastomère diénique susceptible d'être utilisé dans les compositions de caoutchouc conformes à l'invention:

(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère, notamment diénique, l'homme du métier comprendra que la présente invention est de préférence mise en œuvre avec des élastomères diéniques essentiellement insaturés, en particulier du type (a) ou (b) ci-dessus.

Dans le cas de copolymères (b), ceux-ci peuvent contenir de 20 % à 99 % en poids d'unités diéniques et de 1 % et 80 % en poids d'unités vinylaromatiques.

À titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

À titre de composés vinylaromatiques conviennent par exemple le styrène, l'ortho-, le méta-, le para-méthylstyrène, le mélange commercial « vinyle-toluène », le paratertiobutylstyrène, les méthoxystyrènes, les chlorostyrènes, le vinylmésitylène, le divinylbenzène, le vinylnaphtalène.

Préférentiellement, le ou les élastomères diéniques de la composition selon l'invention peuvent être choisis préférentiellement dans le groupe des élastomères diéniques constitué par les polybutadiènes (en abrégé « BR »), les polyisoprènes (en abrégé « IR ») de synthèse, le caoutchouc naturel (en abrégé « NR »), les copolymères de butadiène, les copolymères d'isoprène et les mélanges de ces élastomères. De tels copolymères sont plus préférentiellement choisis dans le groupe constitué par les copolymères de butadiène-styrène (en abrégé « SBR ») que ces derniers soient préparés par polymérisation en émulsion (« ESBR ») ou par polymérisation en solution (« SSBR »), les copolymères d'isoprène-butadiène (en abrégé « BIR »), les copolymères d'isoprène-styrène (en abrégé « SIR »), les copolymères d'isoprène-butadiène-styrène (en abrégé « SBIR »). De préférence, l'élastomère diénique est choisi dans le groupe constitué par les polybutadiènes (BR), les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélange de ces copolymères.

Parmi les élastomères diéniques, conviennent les polybutadiènes et en particulier ceux ayant une teneur (% molaire) en unités -1,2 comprise entre 4% et 80% ou ceux ayant une teneur (% molaire) en cis-1,4 supérieure à 80% , les polyisoprènes, les copolymères de butadiène-styrène et en particulier ceux ayant une Tg (température de transition vitreuse (Tg, mesurée selon ASTM D3418 de 1999) comprise entre 0°C et - 70°C et plus particulièrement entre - 10°C et - 60°C, une teneur en styrène comprise entre 5% et 60% en poids et plus particulièrement entre 20% et 50% en poids, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg allant de - 40°C à - 80°C, les copolymères isoprène-styrène et notamment ceux ayant une teneur en styrène comprise entre 5% et 50% en poids et une Tg comprise entre - 5°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène

comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

Selon un mode de réalisation particulier, l'élastomère diénique est majoritairement (i.e., pour plus de 50 pce) un SBR, qu'il s'agisse d'un SBR préparé en émulsion (« ESBR ») ou d'un SBR préparé en solution (« SSBR »), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45% en poids, une teneur (% molaire) en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode particulier de réalisation de l'invention, l'élastomère diénique de la composition selon l'invention comprend un coupage (mélange) d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Ces élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Préférentiellement, l'élastomère est un élastomère diénique fonctionnalisé.

De préférence l'élastomère diénique fonctionnalisé est un copolymère de butadiène-styrène fonctionnalisé.

On entend par « élastomère diénique fonctionnalisé » un élastomère diénique synthétique qui comporte au moins un groupement chimique comprenant un ou plusieurs hétéroatomes, tels que par exemple un atome de soufre S, un atome d'azote N, un atome d'oxygène O, un atome de silicium Si, un atome d'étain Sn. Dans le cadre de la présente description ; ce groupement chimique est aussi appelé « fonction ». Les deux termes sont utilisés indifféremment.

Ce groupement chimique peut se situer en bout de chaîne, c'est-à-dire à une extrémité de la chaîne élastomère principale linéaire. On dira alors que l'élastomère diénique est fonctionnalisé « en bout de chaîne » ou « en extrémité de chaîne ». C'est généralement un élastomère obtenu par réaction d'un élastomère vivant sur un agent de fonctionnalisation, c'est-à-dire toute molécule au moins monofonctionnelle, la fonction étant tout type de groupement chimique connu par l'homme de l'art pour réagir avec un bout de chaîne vivant.

Ce groupement chimique peut se situer dans la chaîne élastomère principale linéaire. On dira alors que l'élastomère diénique est couplé ou encore fonctionnalisé « en milieu de chaîne », par opposition à la position « en bout de chaîne » et bien que le groupement ne se situe pas précisément au milieu de la chaîne élastomère. C'est généralement un élastomère obtenu par réaction de deux chaînes de l'élastomère vivant sur un agent de couplage, c'est-à-dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile de l'élastomère. On dira alors que l'élastomère diénique est étoilé. C'est généralement un élastomère obtenu par réaction de n chaînes de l'élastomère vivant sur un agent d'étoilage, c'est-à-dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère diénique fonctionnalisé, ainsi que le cas échéant d'espèces étoilées. Selon les conditions opératoires, principalement le rapport molaire de l'agent de fonctionnalisation aux chaînes vivantes, certaines espèces sont majoritaire dans le mélange.

Préférentiellement, l'élastomère diénique fonctionnalisé comprend au moins une fonction polaire comprenant au moins un atome d'oxygène.

Préférentiellement, la fonction polaire peut être choisie dans le groupe constitué par le silanol, les alkoxysilanes, alkoxysilanes porteurs d'un groupement amine, l'époxyde, les éthers, les esters, les acides carboxyliques et l'hydroxyle. La fonction polaire améliore notamment l'interaction entre la charge renforçante inorganique et l'élastomère. De tels élastomères fonctionnalisés sont connus en soi et sont décrits notamment dans les documents suivants FR2740778, US6013718, WO2008/141702, FR2765882, WO01/92402, WO2004/09686, EP1127909, US6503973, WO2009/000750 et WO 2009/000752.

De préférence, l'élastomère diénique fonctionnalisé est un élastomère diénique comportant une fonction polaire

qui est un silanol.

Préférentiellement, le silanol est situé en bout de chaîne ou en milieu de la chaîne principale de l'élastomère diénique fonctionnalisé. Plus préférentiellement, le silanol est situé en bout de chaîne de la chaîne principale de l'élastomère diénique fonctionnalisé.

De préférence, l'élastomère diénique fonctionnalisé est un élastomère diénique (notamment un SBR) dans lequel la fonction silanol est située en bout de chaîne. Cet élastomère diénique fonctionnalisé comprend en une extrémité de sa chaîne principale une fonction silanol ou un groupement polysiloxane ayant une extrémité silanol de formule $-(SiR_1R_2-O-)mH$ avec m représentant un nombre entier de valeur allant de 3 à 8, de préférence 3, $R_1$ et $R_2$, identiques ou différents, représentent un radical alkyle de 1 à 10 atomes de carbone, de préférence un radicale alkyle ayant 1 à 4 atomes de carbone.

Ce type d'élastomère peut être obtenu selon les procédés décrits dans le document EP0778311 et plus particulièrement selon le procédé consistant, après une étape de polymérisation anionique, de fonctionnaliser l'élastomère vivant avec un agent de fonctionnalisation de type polysiloxane cyclique pour autant que le milieu réactionnel ne permette pas la polymérisation du cyclopolysiloxane. À titre de polysiloxanes cycliques, on peut citer ceux répondant à la formule (V):

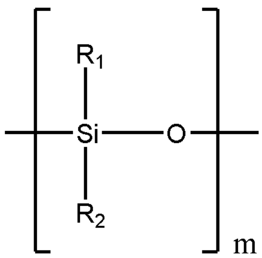

(V)

avec m représente un nombre entier de valeur allant de 3 à 8, de préférence 3, $R_1$ et $R_2$, identiques ou différents, représentent un radical alkyle de 1 à 10 atomes de carbone, de préférence un radicale alkyle ayant 1 à 4 atomes de carbone. Parmi ces composés on peut citer l'hexaméthylcyclotrisiloxane.

Plus préférentiellement, l'élastomère diénique fonctionnalisé est un élastomère diénique (notamment un SBR) comprenant en une extrémité de sa chaîne principale une fonction silanol ou un groupement polysiloxane ayant une extrémité silanol de formule $-(SiR_1R_2-O-)mH$ avec m représentant un nombre entier de valeur égale à 3, de préférence 3, $R_1$ et $R_2$, identiques ou différents, représentent un radical alkyle ayant 1 à 4 atomes de carbone.

Préférentiellement, l'élastomère diénique fonctionnalisé (notamment les SBR) comporte une fonction polaire qui est un alcoxysilane porteur ou non d'une autre fonction (ou porteur d'un autre groupement chimique, les expressions sont synonymes).

De préférence, cet élastomère diénique fonctionnalisé comprend au sein de sa chaîne principale au moins un groupe alcoxysilane lié à la chaîne élastomère par l'atome de silicium, et éventuellement porteur d'au moins une autre fonction.

Selon certaines variantes, le groupe alcoxysilane (porteur ou non d'une autre fonction) se situe en une extrémité de la chaîne principale de l'élastomère (bout de chaîne).

Selon d'autres variantes, le groupe alcoxysilane (porteur ou non d'une autre fonction) se situe se situe dans la chaîne élastomère principale (milieu de chaîne). L'atome de silicium de cette fonction lie les deux branches de la chaîne principale de l'élastomère diénique.

Le groupe alcoxysilane (porteur ou non d'une autre fonction) comprend un radical alcoxyle en $C_1$-$C_{10}$, éventuellement partiellement ou totalement hydrolysé en hydroxyle, voire en $C_1$-$C_8$, de préférence en $C_1$-$C_4$, et est plus préférentiellement méthoxy et éthoxy.

L'autre fonction est de préférence portée par le silicium du groupe alcoxysilane, directement ou par l'intermédiaire d'un groupe espaceur défini comme étant un atome ou un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en $C_1$-$C_{10}$, de préférence alkyle en $C_1$-$C_4$, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en $C_1$-$C_{10}$, de préférence alkyle en $C_1$-$C_4$, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

Préférentiellement, l'autre fonction est de préférence une amine tertiaire, plus préférentiellement un groupement diéthylamino- ou diméthylamino-.

Préférentiellement, l'élastomère diénique fonctionnalisé (notamment un SBR) peut comporter une fonction polaire qui est un alcoxysilane porteur ou non d'un groupement amine.

Préférentiellement, l'alcoxysilane porteur ou non d'un groupement amine est situé en bout de chaîne ou en milieu de chaîne de la chaîne principale de l'élastomère diénique fonctionnalisé. Plus préférentiellement le groupement alcoxysilane porteur ou non du groupement amine est situé en milieu de chaîne de la chaîne principale de l'élastomère diénique fonctionnalisée.

Préférentiellement, le groupement amine est une amine tertiaire.

De préférence, le groupe alcoxysilane peut être représenté par la formule (VI) :

$$(*\text{-})_a Si(OR')_b R_c X \qquad (VI)$$

dans laquelle :

- *- représente la liaison à une chaîne élastomère ;
- le radical R représente un radical alkyle, substitué ou non substitué, en $C_1$-$C_{10}$, voire en $C_1$-$C_8$, de préférence un radical alkyle en $C_1$-$C_4$, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, étant en $C_1$-$C_{10}$, voire en $C_1$-$C_8$, de préférence un radical alkyle en $C_1$-$C_4$, plus préférentiellement méthyle et éthyle ;
- X représente un groupement incluant l'autre fonction;
- a vaut 1 ou 2, b vaut 1 ou 2, et c vaut 0 ou 1, sous réserve que a+b+c =3.

Plus préférentiellement, l'élastomère diénique fonctionnalisé est un élastomère diénique (notamment un SBR) comprend au sein de sa chaîne principale au moins un groupe alcoxysilane de formule (VI) dans laquelle :

- *- représente la liaison à une chaîne élastomère ;
- le radical R représente un radical alkyle, substitué ou non substitué, en $C_1$-$C_4$, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, en $C_1$-$C_4$, plus préférentiellement méthyle et éthyle ;
- X représente un groupement incluant l'autre fonction; de préférence une amine tertiaire ;
- a vaut 1 ou 2, b vaut 1 ou 2, et c vaut 0 ou 1, sous réserve que a+b+c =3.

Ce type d'élastomère est principalement obtenu par fonctionnalisation d'un élastomère vivant issu d'une polymérisation anionique. Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des condition de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Selon une variante particulièrement préférée, l'élastomère diénique modifié comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium. Plus particulièrement encore, l'élastomère diénique

fonctionnalisé en milieu de chaîne par un groupe alcoxysilane représente 70% en poids de l'élastomère diénique modifié.

Ces élastomères fonctionnalisés peuvent être utilisés en coupage (mélange) entre eux ou avec des élastomères non fonctionnalisés.

Les compositions de caoutchouc conformes à l'invention peuvent contenir un seul élastomère diénique fonctionnalisé ou non ou bien un mélange de plusieurs élastomères diéniques fonctionnalisés ou non, le ou les élastomères diéniques pouvant être utilisés en association avec tout type d'élastomère synthétique autre que diénique, voire avec des polymères autres que des élastomères, par exemple des polymères thermoplastiques.

☐ Charge renforçante inorganique

Par « charge renforçante inorganique », doit être entendu ici, de manière connue, toute charge inorganique ou minérale, quelles que soient sa couleur et son origine (naturelle ou de synthèse), encore appelée charge « blanche », charge « claire » ou encore charge « non-noire » (« *non-black filler*") par opposition au noir de carbone, cette charge inorganique étant capable de renforcer à elle seule, sans autre moyen qu'un agent de couplage intermédiaire, une composition de caoutchouc notamment destinées à la fabrication de produits semi-finis pour pneumatiques ou de pneumatiques, en d'autres termes apte à remplacer, dans sa fonction de renforcement, un noir de carbone conventionnel de grade pneumatique pour des compositions de caoutchouc notamment destinées à la fabrication de produits semi-finis pour pneumatiques ou de pneumatiques. Une telle charge se caractérise généralement par la présence de groupes fonctionnels, notamment hydroxyle (-OH), à sa surface, nécessitant en cela l'emploi d'un agent ou système de couplage destiné à assurer une liaison chimique stable entre l'élastomère et ladite charge.

La charge renforçante inorganique utilisable dans les compositions de caoutchouc conformes à l'invention comprend au moins une silice S présentant :

- une surface spécifique CTAB $S_{CTAB}$ comprise dans un domaine allant de 40 à 300 $m^2/g$ ;
- une différence entre la surface spécifique BET $S_{BET}$ et la surface spécifique CTAB $S_{CTAB}$ supérieure ou égale à 35 $m^2/g$ ;
- un taux d'aluminium $W_{A1}$ compris dans un domaine allant de 0,5 à 7,0 % en poids par rapport au poids de la silice S;
- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 253 \qquad (II).$$

Préférentiellement, la charge renforçante inorganique utilisable dans les compositions de caoutchouc conformes à l'invention comprend au moins une silice S susceptible d'être obtenue par un procédé de préparation, ledit procédé comprenant les étapes suivantes:

(i) on dispose d'une solution initiale ayant un pH compris dans un domaine allant de 2,00 à 5,00 ;
(ii) on ajoute à ladite solution initiale, simultanément, un silicate et un acide de sorte que le pH du milieu réactionnel soit maintenu dans un domaine allant de 2,00 à 5,00 ;
(iii) on arrête l'addition de l'acide tout en continuant l'addition du silicate dans le milieu réactionnel jusqu'à l'obtention d'une valeur du pH dudit milieu réactionnel comprise dans un domaine allant de 7,00 à 10,00 ;
(iv) on ajoute au milieu réactionnel, simultanément, au moins un composé d'aluminium, un silicate et un acide de sorte que le pH du milieu réactionnel soit maintenu dans un domaine allant de 7,00 à 10,00 ;

(v) on arrête l'addition du silicate et dudit au moins un composé d'aluminium tout en continuant l'ajout de l'acide dans le milieu réactionnel jusqu'à l'obtention d'une valeur du pH du milieu réactionnel inférieur à 6,0 et obtenir une suspension de silice précipitée S;

- ladite silice S présentant notamment un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 mesuré exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 253 \qquad (II).$$

Par souci de concision dans la suite de la présente demande, les silices présentant les caractéristiques définies ci-dessus (y compris les modes préférés desdites caractéristiques tels que définis ci-dessous) ainsi que les silices obtenues ou susceptibles d'être obtenues par le procédé défini ci-dessus (y compris les modes préférés dudit procédé tels que définis ci-dessous) sont appelées « silice(s) S ».

La surface spécifique CTAB $S_{CTAB}$ est la surface spécifique externe telle que déterminée par mesure de la quantité de bromure de N-hexadécyl-N,N,N-triméthylammonium adsorbée sur la surface de la silice à un pH donné ; cette mesure étant décrite précédemment.

La surface spécifique CTAB $S_{CTAB}$ de la silice S est supérieure ou égale à 40 $m^2/g$, plus préférentiellement supérieure ou égale à 60 $m^2/g$. Préférentiellement, la $S_{CTAB}$ peut être supérieure ou égale à 70 $m^2/g$. Plus préférentiellement encore, la $S_{CTAB}$ peut être supérieure ou égale à 110 $m^2/g$, supérieure ou égale à 120 $m^2/g$, voire même supérieure ou égale à 130 $m^2/g$.

La $S_{CTAB}$ de la silice S est inférieure ou égale à 300 $m^2/g$, préférentiellement inférieure ou égale à 280 $m^2/g$, plus préférentiellement encore inférieure ou égale à 270 $m^2/g$.

Préférentiellement, la $S_{CTAB}$ de la silice S qui s'est avérée être avantageuse pour les compositions conformes de l'invention peut être comprise dans un domaine allant de 70 à 300 $m^2/g$, de 80 à 300 $m^2/g$, de 110 à 300 $m^2/g$, de 120 à 300 $m^2/g$ ; de 130 à 280 $m^2/g$.

La différence entre les surfaces spécifiques BET et CTAB (notée dans la suite de la description $S_{BET}$-$S_{CTAB}$) est généralement considérée comme étant représentative de la microporosité d'une silice en ce qu'elle constitue une mesure des pores de la silice qui sont accessibles aux molécules d'azote, mais pas à des molécules plus grandes, telles que le bromure de N hexadécyl-N,N,N-triméthylammonium.

La silice S présente une différence $S_{BET}$-$S_{CTAB}$ supérieure ou égale à 35 $m^2/g$. De préférence, la $S_{BET}$-$S_{CTAB}$ de la silice S est supérieure ou égale à 40 $m^2/g$, plus préférentiellement supérieure ou égale à 45 $m^2/g$, plus préférentiellement supérieure ou égale à 50 $m^2/g$, plus préférentiellement encore supérieure ou égale à 55 $m^2/g$, et même voire supérieure ou égale à 60 $m^2/g$. Les valeurs de différence $S_{BET}$-$S_{CTAB}$ ne sont pas limitées. En général, la différence $S_{BET}$-$S_{CTAB}$ de la silice S peut être inférieure ou égale à 150 $m^2/g$, préférentiellement inférieure ou égale à 100 $m^2/g$. La $S_{BET}$-$S_{CTAB}$ n'excède pas notamment 300 $m^2/g$.

Préférentiellement, la différence $S_{BET}$-$S_{CTA}$ est comprise dans un domaine allant de 50 à 300 $m^2/g$, plus préférentiellement de 55 à 150 $m^2/g$.

La surface spécifique BET $S_{BET}$ de la silice S n'est pas particulièrement limitée mais, elle est d'au moins supérieure de 35 $m^2/g$ à la valeur de la surface spécifique CTAB $S_{CTAB}$. La $S_{BET}$ de la silice S est préférentiellement supérieure ou égale à 80 $m^2/g$, de préférence supérieure ou égale à 100 $m^2/g$, de préférence supérieure ou égale à 140 $m^2/g$, de préférence supérieure ou égale à 160 $m^2/g$, de préférence supérieure ou égale à 170 $m^2/g$, plus préférentiellement supérieure ou égale à 180 $m^2/g$. De préférence, $S_{BET}$ est inférieure ou égale à 450 $m^2/g$, plus préférentiellement inférieure ou égale à que 400 $m^2/g$.

La silice S peut présenter les combinaisons préférées de surfaces spécifiques suivantes : une $S_{CTAB}$ comprise dans un domaine allant de 70 à 300 $m^2/g$ et une $S_{BET}$ comprise dans un domaine allant de 110 à 450 $m^2/g$ ; une $S_{CTAB}$

comprise dans un domaine allant de 110 à 300 $m^2$/g et une $S_{BET}$ comprise dans un domaine allant de 160 à 450 $m^2$/g ; une $S_{CTAB}$ comprise dans un domaine allant de 110 à 300 $m^2$/g et une $S_{BET}$ comprise dans un domaine allant de 180 à 450 $m^2$/g ; une $S_{CTAB}$ comprise dans un domaine allant de 120 à 300 $m^2$/g et une $S_{BET}$ comprise dans un domaine allant de 200 à 450 $m^2$/g.

La silice S comprend de l'aluminium. Le taux d'aluminium ($W_{A1}$) de la silice S est compris dans un domaine allant de 0,5 à 7,0 % en poids, préférentiellement de 0,5 à 5,0 % en poids. Dans l'ensemble du présent document, le taux d'aluminium $W_{A1}$ est défini comme étant le taux d'Al en poids par rapport au poids de silice S. $W_{A1}$ est déterminé (mesuré) par spectrométrie d'émission atomique couplée à un plasma induit (ICP-AES) comme décrit précédemment.

$W_{A1}$ est, de préférence, supérieur ou égal à 0,8 % en poids, et préférentiellement supérieur ou égal à 1,0 % en poids. Plus préférentiellement, $W_{A1}$ peut être compris dans un domaine allant de 0,8 à 3,5 % en poids, et voire même de 1,0 à 3,0 % en poids.

Il doit être entendu que la silice S peut contenir d'autres éléments en plus de l'aluminium, notamment, des exemples non limitatifs d'autres éléments sont, par exemple, Mg, Ca ou Zn.

Il a été observé que, par comparaison à une silice précipitée ayant la même $S_{CTAB}$, la silice S présente une distribution de taille d'agrégats plus élevée et confère aux compositions de caoutchouc les contenant un compromis de performances résistance au roulement/résistance à l'usure amélioré.

La silice S présente une largeur de la distribution de taille d'agrégats Ld, mesurée par sédimentation centrifuge, supérieure ou égale à 1,5, préférentiellement supérieure ou égale à 1,6. Préférentiellement, la largeur de la distribution de taille d'agrégats Ld, mesurée par sédimentation centrifuge, peut être inférieure ou égale à 4, par exemple, inférieure ou égale à 3,5.

Préférentiellement, la largeur de la distribution de taille d'agrégats Ld de la silice S, mesurée par sédimentation centrifuge, est comprise dans un domaine allant de 1,5 à 3,5, préférentiellement de 1,5 à 3,2. Encore plus préférentiellement, la largeur de la distribution de taille d'agrégats Ld de la silice S, mesurée par sédimentation centrifuge, est comprise dans un domaine allant de 1,5 à 3,0, de préférence de 1,5 à 2,5.

Les silices S présentent un diamètre médian des agrégats d50, mesuré par sédimentation centrifuge, élevé pour une valeur de $S_{CTAB}$ donnée. Il est connu que la taille des agrégats de silice et la surface de la silice sont reliées inversement l'une à l'autre : la taille des agrégats diminue lorsque la surface spécifique, notamment la $S_{CTAB}$, augmente.

En particulier, il a été observé que les silices utilisables dans les compositions de caoutchouc selon l'invention présentent un diamètre médian des agrégats d50, mesuré par sédimentation centrifuge, significativement plus élevé que des silices de l'art antérieur contenant de l'aluminium, pour une valeur de surface spécifique $S_{CTAB}$ donné et pour un taux d'aluminium $W_{A1}$ donné. Ce postulat est exprimé par la grandeur A qui satisfait la relation (II) suivante : $A \geq 253$ (II) ; A étant un nombre sans unité et étant défini par l'équation (I) :

$$A = [d50] + 0{,}782 \times [S_{CTAB}] - 8{,}524 \times [W_{Al}] \qquad (I)$$

dans laquelle :

- [d50] est la valeur numérique de d50 exprimé en nm;
- [$S_{CTAB}$] est la valeur numérique de $S_{CTAB}$ exprimée en $m^2$/g ;
- [$W_{A1}$] est la valeur numérique de $W_{A1}$ exprimé en % en poids par rapport au poids de la silice S.

Dans l'équation (I), [d50] est sans unité. Par exemple, si la valeur mesurée de d50 mesuré par sédimentation centrifuge est 16 nm ; alors la valeur numérique de d50 est 16 et donc [d50]=16.

Dans l'équation (I), [$S_{CTAB}$] est sans unité. Par exemple, si la valeur mesurée de $S_{CTAB}$ est 200 $m^2$/g ; alors la valeur numérique de $S_{CTAB}$ est 200 et donc [$S_{CTAB}$]=200.

Dans l'équation (I), [$W_{A1}$] est sans unité. Par exemple, si la valeur mesurée de $W_{A1}$ est 1,3 % en poids par rapport au poids de la silice S alors la valeur numérique de $W_{A1}$ est 1,3 ; et donc [$W_{A1}$]=1,3.

La grandeur A est un nombre sans unité qui, pour la silice S, est égal ou supérieur à 253.

Préférentiellement, la grandeur A est inférieure ou égale 300. Des valeurs préférées de la grandeur A peuvent être : $A \geq 253$, $A \geq 255$, $A \geq 258$, $A \geq 259$, $A \geq 260$.

Préférentiellement, la relation (II) peut être $253 \leq A \leq 298$ (IIa).

Préférentiellement, la relation (II) peut être $255 \leq A \leq 297$ (IIb).

Préférentiellement, la relation (II) peut être $255 \leq A \leq 288$ (IIc).

Préférentiellement, la relation (II) peut être $258 \leq A \leq 285$ (IId).

Préférentiellement, la relation (II) peut être $259 \leq A \leq 285$ (IIe).

Préférentiellement, la relation (II) peut être $259 \leq A \leq 300$ (IIf).

Préférentiellement, lorsque la $S_{CTAB}$ est comprise dans le domaine allant de 40 à 300 $m^2$/g, la silice S présente

un diamètre médian d'agrégats d50, mesuré par sédimentation centrifuge, supérieur ou égal à 30 nm.

Préférentiellement lorsque $W_{A1}$ est compris dans le domaine allant de 0,8 à 3,0 % en poids et que la surface CTAB est comprise dans un domaine allant de 70 à 280 $m^2/g$, des valeurs typiques du diamètre médian d'agrégats d50 sont généralement supérieures ou égales à 65 nm, même supérieures ou égales à 70 nm, et même supérieures ou égales à 80 nm.

Préférentiellement, d50 de la silice S est inférieur ou égal à 320 nm, plus préférentiellement est inférieur ou égale à 300 nm.

Dans un mode de réalisation avantageux, la charge renforçante inorganique comprend une silice S présentant :

- une $S_{CTAB}$ comprise dans le domaine allant de 40 à 300 $m^2/g$ ;
- une différence $S_{BET}$-$S_{CTAB}$ supérieure ou égale à 35 $m^2/g$ ;
- un taux d'aluminium ($W_{A1}$) compris dans le domaine allant de 0,5 à 5,0 % en poids ;
- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 255 \qquad (II):$$

Dans un autre mode de réalisation avantageux, la charge renforçante inorganique comprend une silice S présentant :

- une $S_{CTAB}$ comprise dans le domaine allant de 70 à 300 $m^2/g$ ;
- une différence $S_{BET}$-$S_{CTAB}$ supérieure ou égale à 50 $m^2/g$ ;
- un taux d'aluminium ($W_{A1}$) compris dans le domaine allant de 0,5 à 5,0 % en poids ;
- une largeur de la distribution de taille d'agrégats Ld, mesurée par sédimentation centrifuge, comprise dans le domaine allant de 1,5 à 3,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 255 \qquad (II).$$

Dans un autre mode de réalisation avantageux, la charge renforçante inorganique comprend une silice S présentant :

- une $S_{CTAB}$ comprise dans le domaine allant de 110 à 300 $m^2/g$ ;
- une différence $S_{BET}$-$S_{CTAB}$ supérieure ou égale à 50 $m^2/g$ ;
- un taux d'aluminium ($W_{A1}$) compris dans le domaine allant de 0,8 à 5,0 % en poids ;
- une largeur de la distribution de taille d'agrégats Ld, mesurée par sédimentation centrifuge, comprise dans le domaine allant de 1,5 à 3,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$259 \leq A \leq 300 \quad (IIf).$$

Dans un mode de réalisation avantageux additionnel, la charge renforçante inorganique comprend une silice S présentant :

- une $S_{CTAB}$ comprise dans un domaine allant de 110 à 300 $m^2/g$ ;
- une différence $S_{BET}$-$S_{CTAB}$ supérieure ou égale à 50 $m^2/g$ ;
- un taux d'aluminium ($W_{A1}$) compris dans un domaine allant de 0,8 à 3,0 % en poids ;
- une largeur de la distribution de taille d'agrégats Ld, mesurée par sédimentation centrifuge, comprise dans un domaine allant de 1,5 et 2,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$259 \leq A \leq 300 \qquad (IIf).$$

Dans un mode de réalisation avantageux additionnel, la charge renforçante inorganique comprend une silice S présentant :

- une $S_{CTAB}$ comprise dans le domaine allant de 110 à 300 $m^2/g$ ;
- une $S_{BET}$ comprise dans un domaine allant de 180 $m^2/g$ à 450 $m^2/g$ ;
- une $S_{BET}$-$S_{CTAB}$ supérieure ou égale à 50 $m^2/g$ ;

- un taux d'aluminium ($W_{A1}$) comprise dans le domaine allant de 0,8 à 3,0 % en poids ;
- une largeur de la distribution de taille d'agrégats Ld, mesurée par sédimentation centrifuge, comprise dans un domaine allant de 1,5 à 2,5 ; et
- un diamètre médian des agrégats d50, mesuré par sédimentation centrifuge, tel que pour une valeur donnée de surface spécifique CTAB $S_{CTAB}$ et un taux d'aluminium $W_{A1}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{A1}$] est la valeur numérique de $W_{A1}$ exprimé en % en poids par rapport au poids de la silice S; et

ladite grandeur A satisfait la relation (II) :

$$A \geq 253 \qquad (II).$$

Ces silices S sont de préférence obtenues ou susceptibles d'être obtenues par un procédé de préparation de silice précipitée tel que décrit ci-dessous y compris toutes les variantes et mode préférés dudit procédé. La silice S est une silice précipitée.
Le procédé de préparation de la silice précipitée S comprend les étapes suivantes :

(i) on dispose d'une solution initiale ayant un pH compris dans un domaine allant de 2,00 à 5,00 ;
(ii) on ajoute à ladite solution initiale, simultanément, un silicate et un acide de sorte que le pH du milieu réactionnel soit maintenu dans un domaine allant de 2,00 à 5,00 ;
(iii) on arrête l'addition de l'acide tout en continuant l'addition du silicate dans le milieu réactionnel jusqu'à l'obtention d'une valeur du pH dudit milieu réactionnel comprise dans un domaine allant de 7,00 à 10,00 ;
(iv) on ajoute au milieu réactionnel, simultanément, au moins un composé d'aluminium, un silicate et un acide de sorte que le pH du milieu réactionnel soit maintenu dans un domaine allant de 7,00 à 10,00 ;
(v) on arrête l'addition du silicate et dudit au moins un composé d'aluminium tout en continuant l'ajout de l'acide dans le milieu réactionnel jusqu'à l'obtention d'une valeur du pH du milieu réactionnel inférieur à 6,0 et obtenir une suspension de silice précipitée S.

Dans la présente description, le terme « silicate » est utilisé pour désigner un ou plusieurs silicate(s) qui peu(ven)t être ajouté(s) au cours dudit procédé. Le silicate peut être choisi dans le groupe constitué des silicates de métal alcalin.
Préférentiellement, le silicate est choisi dans le groupe constitué du silicate de sodium et de potassium. Le silicate peut être sous une forme connue quelconque, telle que le métasilicate ou le disilicate.
Dans le cas où le silicate de sodium est utilisé, ce dernier a généralement un rapport en poids $SiO_2/Na_2O$ compris dans un domaine allant de 2,0 à 4,0, en particulier de 2,4 à 3,9, par exemple de 3,1 à 3,8.
Le silicate peut avoir une concentration (exprimé en % poids par rapport à $SiO_2$) comprise dans un domaine allant de 3,9 % à 25,0 % en poids, par exemple de 5,6 % à 23,0 % en poids, en particulier de 5,6 % à 20,7%.
Dans la présente description, le terme « acide » est utilisé pour désigner un ou plusieurs acide(s) qui peu(ven)t être ajouté(s) au cours dudit procédé. Le procédé peut être mis en œuvre avec tout type d'acide connu de l'homme du métier. On utilise généralement comme acide un acide minéral, tel que l'acide sulfurique, l'acide nitrique ou l'acide chlorhydrique, ou d'un acide organique, tel que l'acide acétique, l'acide formique ou l'acide carbonique. Préférentiellement, l'acide est choisi parmi le groupe constitué par l'acide sulfurique, l'acide nitrique ou l'acide chlorhydrique, plus préférentiellement l'acide est l'acide sulfurique.
L'acide ajouté précisément dans le milieu réactionnel peut être sous forme dilué ou concentré. Le même acide peut être utilisé à des étapes différentes du procédé, à des concentrations identiques ou différentes dans les différentes étapes. Préférentiellement, l'acide est l'acide sulfurique
Dans un mode de réalisation préféré du procédé, pour toutes les étapes du procédé l'acide est l'acide sulfurique et le silicate est le silicate de sodium. Préférentiellement, le même silicate de sodium ayant la même concentration (exprimé en % poids par rapport à $SiO_2$) est utilisé dans toutes les étapes du procédé.

Dans l'étape (i) du procédé, on dispose d'une solution initiale ayant un pH compris dans un domaine allant de 2,00 à 5,00 que l'on introduit dans le réacteur. La solution initiale est une solution aqueuse. Le terme « aqueux » indique que le solvant est de l'eau.

De préférence, la solution initiale a un pH compris dans un domaine allant de 2,50 à 5,00, en particulier de 3,00 à 4,50 ; par exemple, de 3,50 à 4,50.

La solution initiale peut être obtenue par ajout d'acide à de l'eau de manière à obtenir une valeur de pH de la solution aqueuse initiale comprise dans un domaine allant de 2,50 à 5,00, en particulier de 3,00 à 4,50 ; par exemple, de 3,50 à 4,50.

Alternativement, la solution initiale peut contenir un silicate. Elle peut donc être également obtenue par ajout d'acide à un mélange d'eau et de silicate de manière à obtenir un pH compris dans un domaine allant de 2,00 à 5,00, en particulier de 3,00 à 4,50; par exemple, de 3,50 à 4,50.

La solution initiale peut également être préparée par ajout d'acide à une solution contenant des particules de silice préalablement formées à un pH inférieur à 7,00, de manière à obtenir une valeur de pH comprise dans un domaine allant de 2,00 à 5,00, de préférence de 2,50 à 5,00, en particulier de 3,00 à 4,50, par exemple de 3,50 à 4,50.

La solution initiale de l'étape (i) peut comprendre ou non un électrolyte. De préférence, la solution aqueuse initiale de l'étape (i) comprend un électrolyte qui ne contient pas d'aluminium.

Le terme « électrolyte » s'entend ici dans son sens acceptation usuelle, c'est-à-dire qu'il signifie toute une substance ionique ou moléculaire qui, lorsqu'elle est en solution, se décompose ou se dissocie pour former des ions ou des particules chargées. Le terme « électrolyte » est utilisé dans la présente description pour indiquer un ou plusieurs électrolyte qui peu(ven)t être présent(s). On peut citer comme électrolyte utilisable dans la solution aqueuse initiale des sels choisis dans le groupe constitué par les sels de métaux alcalins et de métaux alcalino-terreux. Préférentiellement, l'électrolyte utilisable dans la solution aqueuse initiale est un sel du métal du silicate initial et de l'acide utilisés dans le procédé. Des exemples notables de ces sels sont notamment le chlorure de sodium dans le cas de la réaction d'un silicate de sodium avec de l'acide chlorhydrique ou le sulfate de sodium dans le cas de la réaction d'un silicate de sodium avec l'acide sulfurique. De préférence, l'électrolyte est le sulfate de sodium.

De préférence, lorsque du sulfate de sodium est utilisé en tant qu'électrolyte dans l'étape (i), sa concentration dans la solution aqueuse initiale est comprise dans un domaine allant de 8 à 40 g/L, en particulier de 10 à 35 g/L, par exemple de 13 à 30 g/L.

L'étape (ii) du procédé comprend une addition simultanée d'un acide et d'un silicate à la solution initiale. Les quantités ajoutées d'acide et du silicate pendant l'étape (ii) sont régulées de telle manière que le pH du milieu réactionnel soit maintenu dans un domaine allant de 2,00 à 5,00, plus préférentiellement soit maintenu dans un domaine allant de 2,50 à 5,00, en particulier maintenu de 3,00 à 5,00, par exemple maintenu dans un domaine allant de 3,20 à 4,80.

Cette addition simultanée dans l'étape (ii) est avantageusement réalisée de telle manière que la valeur de pH du milieu réactionnel soit constamment égale au pH atteint à l'issue de l'étape (i) à $\pm$ 0,20 unité de pH près.

De préférence, l'étape (ii) est constituée d'une addition simultanée d'acide et de silicate à la solution initiale comme détaillé ci-dessous.

Dans un mode de réalisation du procédé, une étape intermédiaire (ii') peut être conduite entre l'étape (i) et l'étape (ii), dans laquelle on ajoute un silicate et un acide à la solution initiale de sorte que le pH du milieu réactionnel soit maintenu dans un domaine allant de 2,00 à 9,50. L'ajout de silicate et d'acide peut être simultané pendant la totalité ou seulement pendant une partie de l'étape (ii'). L'étape (ii') est typiquement prolongée pendant 1 à 10 minutes, de préférence pendant 2 à 8 minutes avant que l'étape (ii) soit démarrée.

Ensuite, dans l'étape (iii), on arrête l'addition de l'acide tout en continuant l'addition de silicate dans le milieu réactionnel. L'addition d'acide est stoppée lorsque le pH du milieu réactionnel est compris dans un domaine allant de 7,00 à 10,00, de préférence de 7,50 à 9,50.

À la fin de l'étape (iii), c'est-à-dire après l'arrêt de l'ajout de silicate, il peut être avantageux de conduire une étape de mûrissement du milieu réactionnel. Cette étape de mûrissement du milieu réactionnel est, de préférence, conduite au pH obtenu à la fin de l'étape (iii). L'étape de mûrissement peut être conduite sous agitation du milieu réactionnel. L'étape de mûrissement est, de préférence, conduite sous agitation du milieu réactionnel pendant une durée de 2 à 45 minutes, en particulier de 5 à 25 minutes. De préférence, l'étape de mûrissement ne comprend aucun ajout d'acide ou de silicate.

Après l'étape (iii) et l'étape de mûrissement facultative, on procède à l'addition simultanée d'au moins un composé d'aluminium, d'un acide et d'un silicate, de sorte que le pH du milieu réactionnel soit maintenu dans un domaine allant de 7,00 à 10,00, de préférence de 7,50 à 9,50.

Cette addition simultanée d'au moins un composé d'aluminium, d'un acide et d'un silicate (étape (iv)) est de préférence réalisée de telle manière que la valeur de pH du milieu réactionnel soit constamment égale au pH atteint à la fin de l'étape précédente l'étape (iii) à $\pm$ 0,20 unité de pH près.

Il doit être noté que ledit procédé peut comprendre des étapes additionnelles. Par exemple, entre l'étape (iii) et l'étape (iv) d'une part, et entre l'étape de mûrissement éventuelle suivant l'étape (iii) et l'étape (iv) d'autre part, un

acide peut être ajouté au milieu réactionnel. Le pH du milieu réactionnel après cet ajout d'acide doit rester dans un domaine allant de 7,00 à 9,50, de préférence de 7,50 à 9,50.

Dans l'étape (v), on arrête l'addition du silicate et dudit au moins un composé d'aluminium tout en continuant l'addition de l'acide dans le milieu réactionnel de manière à obtenir une valeur de pH dans le milieu réactionnel inférieure à 6,00, de préférence dans un domaine allant de 3,00 à 5,50, en particulier de 3,00 à 5,00. Une suspension de silice précipitée est obtenue dans le réacteur.

À la fin de l'étape (v) et, par conséquent, après l'arrêt de l'addition d'acide dans le milieu réactionnel, une étape de mûrissement peut avantageusement être effectuée. Cette étape de mûrissement du milieu réactionnel est, de préférence, conduite au pH obtenu à la fin de l'étape (iv). L'étape de mûrissement peut être conduite sous agitation du milieu réactionnel. L'étape de mûrissement est, de préférence, conduite sous agitation du milieu réactionnel pendant une durée de 2 à 45 minutes, en particulier de 5 à 25 minutes. De préférence, l'étape de mûrissement ne comprend aucun ajout d'acide ou de silicate.

Au moins un composé d'aluminium est ajouté précisément dans le milieu réactionnel pendant l'étape (iv), c'est-à-dire pendant l'addition simultanée d'un acide et d'un silicate dans le milieu réactionnel à un pH compris dans un domaine allant de 7,00 à 10,00. Ledit au moins un composé d'aluminium peut être ajouté précisément dans le milieu réactionnel au cours de la durée totale de l'étape (iv), c'est-à-dire en même temps que l'addition d'acide et de silicate. En variante, il peut être ajouté précisément pendant seulement une partie de l'étape (iv), par exemple uniquement après qu'une première addition simultanée d'acide et de silicate a été effectuée.

L'expression «au moins un composé d'aluminium» est utilisée pour désigner un ou plusieurs composés d'aluminium qui peuvent être ajoutés au cours dudit procédé.

Tout composé d'aluminium connu peut être utilisable dans ledit procédé, à condition qu'il soit soluble dans l'eau. Des exemples notables de composés d'aluminium adaptés peuvent être, mais ne sont pas limités à, des chlorures, des sulfates ou des nitrates d'aluminium ou des aluminates de métal alcalin. Préférentiellement, le composé d'aluminium est choisi dans le groupe constitué par les aluminates de métal alcalin. De préférence, le composé d'aluminium est choisi dans le groupe constitué par l'aluminate de potassium et l'aluminate de sodium. Plus préférentiellement encore, le composé d'aluminium est l'aluminate de sodium.

Le réacteur dans lequel est mis en œuvre l'ensemble de la réaction du silicate avec l'acide est habituellement muni d'un équipement d'agitation et d'un équipement de chauffage adéquats.

L'ensemble de la réaction du silicate avec l'acide (étapes (i) à (v)) est généralement réalisé à une température comprise dans un domaine allant de 40 à 97°C, en particulier de 60 à 95°C, de préférence de 80 à 95°C, plus préférentiellement de 85 à 95°C.

Selon une variante de l'invention, l'ensemble de la réaction du silicate avec acide est effectué à une température constante, préférentiellement comprise dans un domaine allant de 40 à 97°C, en particulier de 80 à 95°C, plus préférentiellement de 85 à 95°C.

Selon une autre variante de l'invention, la température de fin de réaction est plus élevée que la température de début de réaction : ainsi, on maintient la température au début de la réaction (par exemple au cours des étapes (i) à (iii)) de préférence dans un domaine allant de 40 à 85°C, puis on augmente la température, de préférence jusqu'à une valeur comprise dans un domaine allant de 80 à 95°C, de préférence de 85 à 95°C, valeur à laquelle elle est maintenue (par exemple au cours des étapes (iv) et (v)) jusqu'à la fin de la réaction.

Il a été trouvé que la succession de ces étapes spécifiques, en particulier la présence d'une première addition simultanée d'acide et de silicate à un pH compris dans un domaine allant de 2,00 à 5,00 et de l'addition simultanée d'un composé d'aluminium, d'acide et de silicate à un pH compris dans un domaine allant de 7,00 à 10,00 constitue des conditions importantes pour obtenir une silice précipitée ayant les caractéristiques revendiquées et en particulier une distribution de taille d'agrégats et un diamètre médian des agrégats d50 élevés. Les différents paramètres du procédé, comme par exemple la température, le pH du milieu réactionnel, la quantité d'électrolyte de l'étape (i), la quantité du composé d'aluminium, peuvent être modifiés pour obtenir des silices précipitées ayant des valeurs requises de surface spécifique CTAB $S_{CTAB}$, de surface spécifique BET $S_{BET}$ et du taux d'aluminium $W_{A1}$.

On obtient, à l'issue des étapes qui viennent d'être décrites, une bouillie de silice qui est ensuite séparée (séparation liquide-solide). Préférentiellement, le procédé de préparation de la silice comprend en outre une étape (vi) dans laquelle on filtre ladite suspension et on sèche la silice précipitée.

La séparation mise en œuvre dans ledit procédé de préparation comprend habituellement une filtration, suivie d'un lavage si nécessaire. La filtration s'effectue selon toute méthode connue, par exemple au moyen d'un filtre presse, d'un filtre à bande, d'un filtre sous vide ou d'un filtre rotatif, de préférence au moyen d'un filtre à presse. On obtient à l'issue de cette étape un gâteau de filtration.

Le gâteau de filtration est ensuite soumis à une opération de délitage. Le terme « délitage » est présentement destiné à désigner un procédé dans lequel un solide, à savoir le gâteau de filtration, est converti en un fluide. Après l'étape de délitage (aussi appelée opération de fluidification ou de liquéfaction), le gâteau de filtration est sous une forme apte à l'écoulement, de type fluide et la silice précipitée se retrouve en suspension.

Dans une variante, l'étape de délitage peut comprendre un traitement mécanique qui induit à une réduction de la granulométrie de la silice en suspension. Ledit traitement mécanique peut être conduit en faisant passer le gâteau de filtration à travers un mélangeur à cisaillement élevé, tel que par exemple un broyeur de type colloïdal ou un broyeur à billes. Dans une autre variante, l'étape de délitage peut comprendre un traitement chimique. Le gâteau de filtration est alors soumis à une action chimique par addition, par exemple, d'un acide ou d'un composé d'aluminium, différent ou identique à celui utilisée dans l'étape (iv) du procédé. Le composé aluminium utilisé dans l'étape de délitage est de préférence identique à celui utilisée dans l'étape (iv) du procédé et est par exemple l'aluminate de sodium ou l'aluminate de potassium, de manière encore plus préférée l'aluminate de sodium. Dans une autre variante encore, l'étape de délitage peut comprendre à la fois un traitement mécanique et un traitement chimique.

Lorsqu'un composé d'aluminium est ajouté au gâteau de filtration pendant l'opération de délitage, la quantité est généralement telle que le rapport massique du composé d'aluminium à la quantité de silice, exprimée en $SiO_2$, présents dans le gâteau de filtration soit compris dans un domaine allant de 0,10 % à 0,75 %, de préférence de 0,10 % à 0,50 % en poids, plus préférablement de 0,20 % à 0,45 % en poids.

Indépendamment du stade de l'ajout d'un composé d'aluminium, la quantité cumulée dudit composé d'aluminium ajouté précisément dans le milieu réactionnel et lors de l'étape de délitage chimique est telle que le taux d'aluminium dans la silice précipitée S soit compris dans un domaine allant de 0,5 à 7,0 % en poids par rapport au poids de la silice, de préférence de 0,8 à 3,5 % en poids, et voire même de 1,0 à 3,0 % en poids par rapport au poids de la silice. Les taux du composé d'aluminium ajouté lors de l'étape de délitage chimique peuvent être adaptés pour obtenir la teneur d'aluminium souhaitée dans la silice précipité S par des moyens connus de l'homme du métier.

De préférence, la suspension de silice précipitée S qui est obtenue après l'étape de délitage est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice S susceptible d'être alors obtenue se présente habituellement sous forme de billes sensiblement sphériques. A l'issue de ce type de séchage, on peut alors procéder à une étape de broyage ou de micronisation sur le produit récupéré. La silice S qui est alors susceptible d'être obtenue se présente généralement sous forme d'une poudre.

Lorsque le séchage est effectué à l'aide d'un atomiseur à turbines, la silice S susceptible d'être alors obtenue peut se présenter sous la forme d'une poudre.

Enfin, le produit séché (notamment par un atomiseur à turbines) ou broyé ou micronisé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. La silice S susceptible d'être alors obtenue par cette étape d'agglomération se présente généralement sous la forme de granulés.

Préférentiellement, la silice S peut être éventuellement associée à au moins une silice additionnelle dans les compositions de caoutchouc conformes à l'invention. Autrement dit, la charge renforçante inorganique comprend en outre une silice additionnelle différente de la silice S.

Dans un tel cas, le taux de chacune de ces silices peut compris dans un domaine allant de 1 à 99% en poids par rapport au poids total de la charge renforçante inorganique. De préférence, il est avantageux que la silice S représente au moins 50% en poids du poids total de la charge renforçante inorganique, plus préférentiellement au moins 80% en poids du poids total de la charge renforçante inorganique. Le poids total de la charge renforçante inorganique correspond à la somme du poids la silice S et du poids de la silice additionnelle.

Par « silice additionnelle », on entend toute autre silice différente des silices S, c'est-à-dire présentant des caractéristiques différentes des silices S, notamment présentant une grandeur A ne vérifiant pas la relation (II). A titre de silices additionnelles, on peut citer des silices précipitées ou pyrogénées différentes des silices S. Peuvent notamment être utilisées des silices dites hautement dispersibles (dites « HDS ») telles que par exemple les silices Ultrasil® 7000GR de la société Evonik, les silices Zeosil® 1165 MP et Zeosil® 1115 MP de la société Solvay, la silice Zeosil® Premium 200MP de la société Solvay, la silice Hi-Sil EZ150G de la société PPG, les silices Zeopol 8715, 8745 ou 8755 de la Société Huber, les silices telles que décrites dans les demandes WO03/016215 et WO03/016387.

Dans un autre mode de réalisation, la charge renforçante inorganique peut être un mélange de silice S et d'une autre charge renforçante inorganique choisie dans le groupe constitué par les oxydes d'aluminium, les hydroxydes d'aluminium, les aluminosilicates, les oxydes de titane, les carbures ou nitrures de silicium, tous du type renforçants. De telles charges renforçantes inorganiques sont par exemple décrites par exemple dans les demandes WO99/28376, WO00/73372, WO02/053634, WO2004/003067, WO2004/056915.

A titre de d'oxyde d'aluminium, peut être notamment utilisée une alumine renforçante et hautement dispersible ayant une surface BET allant de 30 à 400 $m^2/g$, plus préférentiellement entre 60 et 250 $m^2/g$, une taille moyenne de

agrégats au plus égale à 500 nm, plus préférentiellement au plus égale à 200 nm. Comme exemples non limitatifs de telles alumines renforçantes, on peut citer notamment les alumines « Baikalox A125 » ou « CR125 » (société Baïkowski), « APA-100RDX » (Condéa), « Aluminoxid C » (Degussa) ou « AKP-G015 » (Sumitomo Chemicals) et celle décrites dans les demandes EP0810258.

A titre d'équivalent à une charge renforçante inorganique additionnelle, l'homme du métier comprend qu'il peut notamment utiliser une charge renforçante du type organique, notamment un noir de carbone tel que décrit ci-après, recouvert au moins en partie d'une couche inorganique, notamment de silice. De tels noirs de carbone sont décrits par exemple dans le document WO2013/190063.

Préférentiellement, la silice S représente 100% en poids du poids total de la charge renforçante inorganique.

La quantité de charge renforçante inorganique dans la composition de caoutchouc de l'invention dépend de l'utilisation de cette composition. En effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que poids lourd. L'homme du métier sait comment adapter la quantité de la charge renforçante inorganique en fonction de l'utilisation de la composition de l'invention.

De préférence, la quantité de charge renforçante inorganique dans la composition peut être comprise dans un domaine allant de préférence de 10 à 200 pce, plus préférentiellement encore compris dans un domaine allant de 30 à 150 pce.

□ Agent de couplage de l'élastomère avec la charge renforçante inorganique

Les compositions de caoutchouc conformes à l'invention comprennent au moins un agent de couplage de l'élastomère avec la charge renforçante inorganique.

Pour coupler la charge renforçante inorganique à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses agrégats) et l'élastomère diénique. L'agent de couplage a, par exemple, comme formule générale simplifiée « Y-T-X », dans laquelle :

- Y représente un groupe fonctionnel (fonction « Y ») qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique ;
- X représente un groupe fonctionnel (fonction « X ») capable de se lier physiquement et/ou chimiquement à l'élastomère, par exemple par l'intermédiaire d'un atome de soufre ;
- T représente un groupe permettant de relier Y et X.

Cette connexion peut s'établir par exemple par le biais de liaisons covalentes, hydrogène, ioniques et/ou électrostatiques entre la fonction Y et la charge renforçante inorganique et entre la fonction Z et l'élastomère.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage ont été décrits dans un très grand nombre de documents et sont bien connus de l'homme du métier. On peut utiliser en fait tout agent de couplage susceptible d'assurer efficacement la liaison ou couplage entre une charge renforçante inorganique et l'élastomère.

De préférence, l'agent de couplage de l'élastomère avec la charge renforçante inorganique est un composé organosilane.

Préférentiellement, le composé organosilane est choisi dans le groupe constitué par les organosilanes polysulfurés (symétriques ou asymétriques), les polyorganosiloxanes, les mercaptosilanes, les mercaptosilanes bloqués, les dimères de mercaptosilane, les dimères de mercaptosilane bloqué, les dimères de silane possédant un motif mercaptosilane, les oligomères de mercaptosilane, les oligomères de mercaptosilane bloqué et les oligomères de silane possédant au moins un motif mercaptosilane et au moins un mercaptosilane bloqué, de préférence les organosilanes polysulfurés.

Ces agents de couplage de l'élastomère avec la charge renforçante inorganique, notamment, ont été décrits dans un grand nombre de documents, les plus connus étant des alkoxysilanes bifonctionnels tels que des alkoxysilanes sulfurés. On utilise en particulier des alkoxysilanes sulfurés, dits « symétriques » ou « asymétriques » selon leur structure particulière, tels que décrits par exemple dans les demandes de brevet ou brevets US-A-3 842 111, US-A-3 873 489, US- A-3 978 103, US-A-3 997 581, US-A-4 002 594, US-A-4 072 701, US-A-4 129 585, ou dans les documents plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085

et WO 02/083782.

Plus préférentiellement, le composé organosilane est choisi parmi les organosilanes polysulfurés (symétriques ou asymétriques) ; aussi appelés silanes polysulfurés.

Plus particulièrement, on peut utiliser des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Préférentiellement, conviennent en particulier, sans que la définition ci-après soit limitative, des silanes polysulfurés répondant à la formule générale (VII) suivante:

$$Z\text{-}A\text{-}S_x\text{-}A\text{-}Z \qquad \text{(VII)},$$

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules (VII) ci-après:

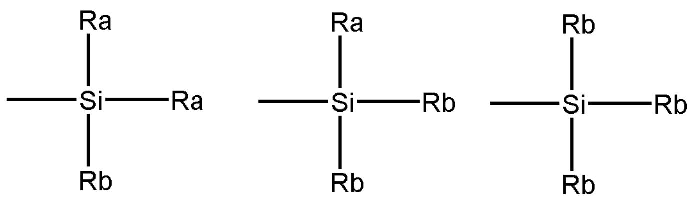

(VIII)

dans lesquelles:

- les radicaux $R_a$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R_b$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (VII) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_sO)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO02/083782 précitée (ou US7217751).

A titre d'exemple d'agents de couplage autres qu'un alkoxysilane polysulfuré, on peut utiliser notamment des POS (polyorganosiloxanes) bifonctionnels ou encore des polysulfures d'hydroxysilane ($R_b$ = OH dans la formule VIII cidessus) tels que décrits par exemple dans les demandes de brevet WO02/30939 (ou US6774255), WO02/31041 (ou US2004/051210), et WO2007/061550, ou encore des silanes ou POS porteurs de groupements fonctionnels azo-dicarbonyle, tels que décrits par exemple dans les demandes de brevet WO 2006/125532, WO2006/125533, WO2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, les dimères ou oligomères de ces silanes, tels que décrits par exemple dans les brevets ou demandes de brevet US6849754, WO99/09036, WO2006/023815,

WO2007/098080, WO2007/98120, EP1994038, EP2079793, WO2010/072685 et WO2008/055986.

Le taux d'agent de couplage de l'élastomère avec la charge renforçante inorganique est aisément ajusté par l'homme du métier selon le taux de la charge renforçante inorganique utilisé dans la composition.

Plus particulièrement, le taux en agent de couplage est avantageusement inférieure à 20 pce, étant entendu qu'il est en général souhaitable d'en utiliser le moins possible. Typiquement le taux d'agent de couplage représente de 0,5% à 15% en poids par rapport au poids de la charge renforçante inorganique. Son taux est préférentiellement compris entre 0,5 et 12 pce, plus préférentiellement compris dans un domaine allant de 3 à 10 pce.

☐ Les agents de recouvrement :

Les compositions de caoutchouc conformes à l'invention peuvent également contenir des activateurs de couplage lorsque qu'un agent de couplage est utilisé, des agents de recouvrement de la charge inorganique, ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru. Ces agents de recouvrement sont bien connus (voir par exemple les demandes de brevet WO 2006/125533, WO 2007/017060 et WO 2007/003408), on citera par exemple des hydroxysilanes ou des silanes hydrolysables tels que des hydroxysilanes (voir par exemple WO 2009/062733) des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), des polyorgano-siloxanes hydroxylés ou hydrolysables (par exemple des $\alpha,\omega$-dihydroxy-poly-organosilanes (notamment des $\alpha,\omega$-dihydroxy-polydiméthylsiloxanes) (voir par exemple EP0784072), des acides gras comme par exemple l'acide stéarique.

☐ Charge renforçante organique

Les compositions de caoutchouc conforme à l'invention peuvent en outre comprendre au moins une charge renforçante organique telle que par exemple du noir de carbone ou une charge renforçante de type polymérique. Préférentiellement, la charge renforçante organique est du noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère, notamment isoprénique, sous la forme d'un masterbatch (voir par exemple demandes WO97/36724 ou WO99/16600).

Comme exemples de charges organiques polymériques, on peut citer les charges organiques de polyvinyle fonctionnalisé telles que décrites dans les demandes WO2006/069792, WO2006/069793, WO2008/003434 et WO2008/003435.

Lorsqu'une charge organique est associée à la charge renforçante inorganique, la charge organique est utilisée en faible proportion, c'est-à-dire que la charge renforçante inorganique reste la charge majoritaire.

Préférentiellement, la fraction massique de la charge renforçante organique est inférieure à 50% par rapport à masse totale de la charge renforçante (masse totale de la charge renforçante = masse de la charge renforçante inorganique + masse de la charge renforçante organique), de préférence inférieure ou égale à 20% par rapport à la masse totale de la charge renforçante.

Plus particulièrement, le taux de la charge renforçante organique, notamment le taux du noir de carbone, compris dans un domaine allant de 2 à 20 pce, plus préférentiellement compris dans un domaine allant de 5 à 15 pce.

☐ Autres additifs

Les compositions de caoutchouc conformes à l'invention peuvent comporter optionnellement également tout ou partie des additifs usuels habituellement utilisés dans les compositions d'élastomères destinées à la fabrication de pneumatiques ou de articles semi-finis pour pneumatiques, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants, des accepteurs (par exemple résine phénolique novolaque) ou des donneurs de méthylène (par exemple HMT ou H3M) tels que décrits par exemple dans la demande WO02/10269. De préférence, lorsque la composition de caoutchouc de l'invention comprend un agent plastifiant, il est choisi dans le groupe constitué par les résines hydrocarbonées solides (ou résines plastifiantes), les huiles d'extension (huiles plastifiantes), ou un mélange de résines et d'huiles plastifiantes.

☐ Système de réticulation

Les compositions de caoutchouc conforme à l'invention comprennent un système de réticulation chimique. On peut utiliser tout type de système de réticulation connu de l'homme du métier pour les compositions de caoutchouc.

De préférence, le système de réticulation est un système de vulcanisation, c'est-à-dire un système à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Lorsque le soufre est utilisé, il est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

Le système de vulcanisation de la composition conforme à l'invention peut également comprendre un ou plusieurs accélérateurs additionnels, par exemple les composés de la famille des thiurames, les dérivés dithiocarbamates de zinc les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé « MBTS »), disulfure de tetrabenzylthiurame (« TBZTD »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBS ») dibenzyldithiocarbamate de zinc (« ZBEC ») et les mélanges de ces composés. De préférence, on utilise un accélérateur primaire du type sulfénamide.

☐ Procédé de préparation des compositions selon l'invention

Les compositions de caoutchouc de l'invention, destinées notamment à la fabrication de pneumatiques ou de produits semi-finis pour pneumatiques, peuvent être fabriquées par tout procédé bien connu de l'homme du métier.

Par exemple, ces compositions de caoutchouc conformes à l'invention peuvent être fabriquées dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale (notée $T_{max}$) comprise entre 130°C et 200°C, de préférence entre 145°C et 185°C, suivie d'une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation, de telles phases ont été décrites par exemple dans les demandes EP-A-0501227, EP-A-0735088 et EP-A-0810258.

Par exemples, dans un procédé de préparation des compositions de l'invention, la silice S associée au non à une autre charge renforçante inorganique, telle qu'une silice additionnelle par exemple, ou à un noir de carbone et l'agent de couplage de l'élastomère avec ladite charge renforçante inorganique sont incorporés par malaxage à l'élastomère ou les élastomères au cours de la première phase dite non-productive, c'est-à-dire que l'on introduit dans le mélangeur et que l'on malaxe thermomécaniquement, en une ou plusieurs fois, au moins ces ingrédients. Puis, après par exemple une à deux minutes de malaxage, les éventuels agents de recouvrement ou de mise en œuvre complémentaires et autres additifs divers, à l'exception du système de réticulation ou de vulcanisation sont ajoutés au mélangeur interne. Cet ensemble est malaxé thermomécanique jusqu'à atteindre la température maximale $T_{max}$ précitée. On peut envisager une ou plusieurs étapes supplémentaires visant à préparer des mélanges maîtres (aussi appelés masterbatches en anglais) d'élastomères/charges renforçantes inorganiques destinés à être introduits lors de la première phase dite non-productive. Les mélanges maîtres (aussi appelés masterbatches en anglais) d'élastomères/charges renforçantes inorganiques comprenant au moins une silice S peuvent être obtenus en mélangeage masse ou par mélangeage liquide à partir d'un latex d'élastomère et d'une dispersion aqueuse de ladite charge renforçante inorganique.

Le mélange est ensuite refroidi et on incorpore alors le système de réticulation (de préférence le système de vulcanisation) à basse température (typiquement inférieure à 100°C) généralement dans un mélangeur externe tel qu'un mélangeur à cylindres; le tout est alors mélangé pendant quelques minutes, par exemple entre 5 et 15 min. Cette deuxième phase est la phase dite « productive ».

De préférence, le procédé de préparation d'une composition de caoutchouc conforme à l'invention, comprend les étapes suivantes:

- on met en contact au moins un élastomère, au moins une charge renforçante inorganique, au moins un agent de couplage de l'élastomère avec la charge renforçante inorganique; ladite charge renforçante inorganique comprenant au moins une silice S présentant :

- une surface spécifique CTAB $S_{CTAB}$ comprise dans un domaine allant de 40 à 300 $m^2/g$ ;
- une différence entre la surface spécifique BET $S_{BET}$ et la surface spécifique CTAB $S_{CTAB}$ supérieure ou égale à 35 $m^2/g$ ;
- un taux d'aluminium $W_{A1}$ compris dans un domaine allant de 0,5 à 7,0 % en poids par rapport au poids de la silice;
- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{Al}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{Al}$] est la valeur numérique de $W_{Al}$ exprimé en % en poids par rapport au poids de la silice S; et

ladite grandeur A satisfait la relation (II) :

$$A \geq 253 \qquad (II)$$

- on malaxe thermomécaniquement le tout en une ou plusieurs fois, jusqu'à atteindre une température maximale comprise entre 110°C et 190°C ;
- on refroidit le mélange de l'étape précédente à une température inférieure à 100°C,
- on incorpore au mélange refroidi de l'étape précédente un système de réticulation,
- on malaxe le mélange comprenant le système de réticulation jusqu'à une température maximale inférieure à 110°C.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis notamment pour pneumatiques. Ces produits peuvent ensuite être utilisés pour la fabrication de pneumatiques, selon les techniques connues de l'homme du métier, avec l'avantage de l'invention à savoir un bon compromis résistance au roulement/résistance à l'usure.

De préférence, le procédé de préparation d'une composition de caoutchouc conforme à l'invention, comprend en outre une étape dans laquelle on cuit le mélange malaxé comprenant le système de réticulation.

Cette étape de cuisson (ou de vulcanisation) s'effectue selon des méthodes bien connues de l'homme du métier. Elle est notamment conduite de manière connue à une température généralement comprise entre 130°C et 200°C, sous pression de plusieurs centaines de bars, pendant un temps suffisant qui peut être compris dans un domaine allant par exemple entre 5 et 90 min en fonction notamment de la température de cuisson, du système de réticulation adopté, de la cinétique de vulcanisation de la composition considérée ou encore de la taille du pneumatique.

□ Articles semi-finis et pneumatiques

Un autre objet de la présente invention concerne un article semi-fini notamment pour pneumatique comprenant au moins une composition conforme à l'invention et telle que définie ci-dessus. Les articles semi-finis de la présente invention présentent avantageusement un compromis de résistance au roulement/résistance à l'abrasion amélioré. La composition de caoutchouc du produit semi-fini peut être soit à l'état cru (avant réticulation), soit à l'état cuit (après réticulation).

L'article semi-fini peut tout article utilisable pour la fabrication d'article fini en caoutchouc et par exemple un pneumatique.

Préférentiellement, l'article semi-fini pour pneumatique peut être choisi parmi les sous-couches, les gommes de liaison entre caoutchoucs de différentes natures ou de calandrage de renforts métalliques ou textiles, des gommes de flancs et des bandes de roulement. Plus préférentiellement, l'article semi-fini est une bande de roulement pour pneumatique.

Les articles semi-finis sont obtenus par des méthodes bien connues de l'homme du métier. Les modes préférés des silices S, des élastomères, des agents de couplage mentionnés pour les compositions conformes à l'invention

s'appliquent également à cet article semi-fini.

Un autre objet de la présente invention concerne un pneumatique comprenant au moins une composition de caoutchouc conforme à l'invention et telle que décrite ci-dessus ou comprenant au moins un article semi-fini tel que décrit ci-dessus. Les pneumatiques de la présente invention présentent avantageusement un compromis de résistance au roulement/résistance à l'abrasion amélioré.

Les pneumatiques de l'invention peuvent notamment être destinés à équiper des véhicules à moteur de type tourisme, des SUV (« *Sports Utility Vehicles* »), des deux roues (notamment motos), des avions, comme des véhicules industriels choisis parmi camionnettes, « Poids-lourd » - c'est-à-dire métro, bus, engins de transport routier (camions, tracteurs, remorques), des véhicules hors-la-route tels qu'engins agricoles ou de génie civil -, autres véhicules de transport ou de manutention.

Les pneumatiques de l'invention sont obtenus par des méthodes bien connues de l'homme du métier. Les modes préférés des silices S, des élastomères, des agents de couplage mentionnés pour les compositions conformes à l'invention s'appliquent également à ce pneumatique.

## II - EXEMPLES

Les exemples qui suivent illustrent l'invention sans toutefois la limiter.

### II.1 Préparations des charges renforçantes inorganiques

Les silices utilisées dans les compositions à tester sont les suivantes :

• Silice SC1

La silice SC1 est une silice commercialisée par la société Solvay sous la référence Zeosil® 1165MP. Elle est notamment obtenue selon le procédé décrit dans la demande EP0520862-A1. Ses caractéristiques sont présentées dans le tableau VI.

• Silice SC2

La silice SC2 est une silice commercialisée par la société Solvay sous la référence Zeosil® Premium 200MP. Elle est notamment obtenue selon le procédé décrit dans la demande WO03/016215-A1 pages 1 à 15. Ses caractéristiques sont présentées dans le tableau VI.

• Silice SC3

La silice SC3 a été obtenue conformément au protocole décrit en page 18 lignes 15 à 32 de la demande WO03/106339-A1 (exemple 2). Ses caractéristiques sont présentées dans le tableau VI.

• Silice S1

Dans un réacteur en acier inoxydable de 25 L, on introduit 16,7 L d'eau purifiée et 210 g de $Na_2SO_4$ (solide). La solution ainsi obtenue est agitée et chauffée atteindre une température de 92°C. L'ensemble du procédé est réalisée à cette température et sous agitation pour maintenir un milieu réactionnel homogène. De l'acide sulfurique à une concentration de 7,7 % en poids est introduit de façon à atteindre un pH égal à 3,90.

Une solution de silicate de sodium (de rapport pondéral $SiO_2/Na_2O$ = 3,45 et une concentration en $SiO_2$ = 19,4 % en poids) est introduite dans le réacteur à un débit de 115 g/min pendant 45 secondes. La même solution de silicate de sodium est utilisée dans l'ensemble du procédé. Ensuite, une solution de silicate de sodium à un débit de 115 g/min et une solution d'acide sulfurique de concentration égale de 7,7 % en poids à un débit de 140 g/min sont introduites simultanément dans le réacteur pendant 14 min. Le débit de la solution d'acide sulfurique est régulé de façon à maintenir le pH du milieu réactionnel égal à 4,50. À la fin de cette étape, une solution de silicate de sodium à un débit de 115 g/min et une solution d'acide sulfurique à 96% en poids (appelé dans la suite de la description acide sulfurique 96%) sont introduits simultanément pendant une période de 10 min. Le débit de cette solution d'acide sulfurique 96% est régulé de façon à maintenir un pH égal à 4,50.

L'introduction de l'acide sulfurique 96% est stoppée tandis que l'addition de ladite solution de silicate de sodium est poursuivie avec un débit de 93 g/min jusqu'à ce que le milieu réactionnel atteigne un pH de 8,00.

Une solution de silicate de sodium à un débit de 181 g/min et une solution d'acide sulfurique 96% sont ensuite introduites simultanément dans le milieu réactionnel pendant une période de 3 min. Le débit de la solution d'acide

sulfurique 96% est régulé de sorte que le pH du milieu réactionnel soit maintenu à une valeur de 8,00.

Puis, sont ajoutées simultanément et pendant 15 min : une solution de silicate de sodium à un débit de 181 g/min, une solution d'aluminate de sodium (% massique d'Al: 11,6% - % massique de $Na_2O$: 19,9%) à un débit de 10 g/min et une solution d'acide sulfurique 96%. Le débit de la solution d'acide sulfurique 96% est régulé de sorte que le pH du milieu réactionnel soit maintenu à une valeur de 8,00.

À l'issue cette addition simultanée, le milieu réactionnel est amené à un pH = 4,80 avec de l'acide sulfurique 96%. Le mélange réactionnel est mûri pendant 5 minutes. Une suspension de silice précipitée est ainsi obtenue.

Le milieu réactionnel est filtré et lavé sur un filtre-presse. Le gâteau obtenu est délité mécaniquement. La suspension résultante est séchée au moyen d'une atomisation pour obtenir la silice précipitée S1. Les caractéristiques de la silice précipitée S1 sont indiquées dans le tableau VI.

• Silice S2

Dans un réacteur en acier inoxydable de 2500 L, on introduit 1129 L d'eau et 29,7 kg de $Na_2SO_4$ (solide). La solution ainsi obtenue est agitée et chauffée atteindre une température de 92°C. L'ensemble du procédé est réalisée à cette température et sous agitation pour maintenir un milieu réactionnel homogène. De l'acide sulfurique à 96%) en poids (appelé dans la suite de la description acide sulfurique 96%) est introduit dans le réacteur de façon à atteindre un pH égal à 3,90. Une solution de silicate de sodium (de rapport pondéral $SiO_2/Na_2O$ = 3,46 et une concentration en $SiO_2$ = 19,4 % en poids) est introduite dans le réacteur à un débit de 353 L/h pendant 61 secondes. La même solution de silicate de sodium est utilisée dans l'ensemble du procédé.

Ensuite, une solution de silicate de sodium à un débit de 445 L/h, de l'eau à un débit de 575 L/h et une solution d'acide sulfurique 96% sont introduites simultanément dans le réacteur pendant 15 min. Le débit de la solution d'acide sulfurique 96%) est régulé de façon à maintenir le pH du milieu réactionnel égal à 3,90. À la fin de cette étape, une solution de silicate de sodium à un débit de 445 L/h et une solution d'acide sulfurique 96% sont introduits simultanément pendant une période de 9 min. Le débit de cette solution d'acide sulfurique 96% est régulé de façon à maintenir un pH égal à 3,90. L'introduction de l'acide sulfurique 96% est stoppée tandis que l'addition de ladite solution de silicate de sodium est poursuivie avec un débit de 582 L/h jusqu'à ce que le milieu réactionnel atteigne un pH de 8,00.

Une solution de silicate de sodium à un débit de 703 L/h et une solution d'acide sulfurique 96% sont ensuite introduites simultanément dans le milieu réactionnel pendant une période de 3 min. Le débit de la solution d'acide sulfurique 96% est régulé de sorte que le pH du milieu réactionnel soit maintenu à une valeur de 8,00.

Puis, sont ajoutées simultanément et pendant 15 min : une solution de silicate de sodium à un débit de 703 L/h, une solution d'aluminate de sodium (% massique d'Al: 11,6% - % massique de $Na_2O$: 19,4%) à un débit de 47,6 kg/h et une solution d'acide sulfurique 96%. Le débit de la solution d'acide sulfurique 96% est régulé de sorte que le pH du milieu réactionnel soit maintenu à une valeur de 8,00.

À l'issue cette addition simultanée, le milieu réactionnel est amené à un pH=4,50 par avec de l'acide sulfurique 96%. De l'eau est ensuite introduite pour diminuer la température à une valeur de 85°C et le mélange réactionnel est mûri pendant 5 minutes. Une suspension de silice précipitée est ainsi obtenue.

Le milieu réactionnel est filtré et lavé sur un filtre-presse. Le gâteau obtenu est délité mécaniquement. La suspension résultante est séchée au moyen d'une atomisation pour obtenir la silice précipitée S2. Les caractéristiques de la silice précipitée S2 sont indiquées dans le tableau VI.

• Silice S3

Dans un réacteur en acier inoxydable de 25 L, on introduit 16,7 L d'eau purifiée et 260 g de $Na_2SO_4$ (solide). La solution ainsi obtenue est agitée et chauffée atteindre une température de 92°C. L'ensemble du procédé est réalisée à cette température et sous agitation pour maintenir un milieu réactionnel homogène. De l'acide sulfurique à une concentration de 7,7 % en poids est introduit de façon à atteindre un pH égal à 3,90. Une solution de silicate de sodium (de rapport pondéral $SiO_2/Na_2O$ = 3,4 et une concentration en $SiO_2$ = 19,4 % en poids) est introduite dans le réacteur à un débit de 114 g/min pendant 45 secondes. La même solution de silicate de sodium est utilisée dans l'ensemble du procédé.

Ensuite, une solution de silicate de sodium à un débit de 114 g/min et une solution d'acide sulfurique de concentration égale de 7,7 % en poids à un débit de 137 g/min sont introduites simultanément dans le réacteur pendant 14 min. Le débit de la solution d'acide sulfurique est régulé de façon à maintenir le pH du milieu réactionnel égal à 4,53. À la fin de cette étape, une solution de silicate de sodium à un débit de 114 g/min et une solution d'acide sulfurique à 96% en poids (appelé dans la suite de la description acide sulfurique 96%) sont introduits simultanément pendant une période de 10 min. Le débit de cette solution d'acide sulfurique 96%) est régulé de façon à maintenir un pH égal à 4,53.

L'introduction de l'acide sulfurique 96% est stoppée tandis que l'addition de ladite solution de silicate de sodium est poursuivie avec un débit de 114 g/min jusqu'à ce que le milieu réactionnel atteigne un pH de 8,00.

Une solution de silicate de sodium à un débit de 181 g/min et une solution d'acide sulfurique 96% sont ensuite

introduites simultanément dans le milieu réactionnel pendant une période de 3 min. Le débit de la solution d'acide sulfurique 96% est régulé de sorte que le pH du milieu réactionnel soit maintenu à une valeur de 8,00.

Puis, sont ajoutées simultanément et pendant 15 min : une solution de silicate de sodium à un débit de 181 g/min, une solution d'aluminate de sodium (% massique d'Al: 11,6% - % massique de $Na_2O$: 19,9%) à un débit de 10 g/min et une solution d'acide sulfurique 96%. Le débit de la solution d'acide sulfurique 96% est régulé de sorte que le pH du milieu réactionnel soit maintenu à une valeur de 8,00.

A l'issue cette addition simultanée, le milieu réactionnel est amené à un pH=4,80 par avec de l'acide sulfurique 96%). Le mélange réactionnel est mûri pendant 5 minutes. Une suspension de silice précipitée est ainsi obtenue.

Le milieu réactionnel est filtré et lavé sur un filtre-presse. Le gâteau obtenu est délité mécaniquement. La suspension résultante est séchée au moyen d'une atomisation pour obtenir la silice précipitée S3. Les caractéristiques de la silice précipitée S3 sont indiquées dans le tableau VI.

• Silice S4

Dans un réacteur en acier inoxydable de 25 L, on introduit 16,7 L d'eau purifiée et 260 g de $Na_2SO_4$ (solide). La solution ainsi obtenue est agitée et chauffée atteindre une température de 92°C. L'ensemble du procédé est réalisée à cette température et sous agitation pour maintenir un milieu réactionnel homogène. De l'acide sulfurique à une concentration de 7,7 % en poids est introduit de façon à atteindre un pH égal à 3,90. Une solution de silicate de sodium (de rapport pondéral $SiO_2/Na_2O$ = 3,4 et une concentration en $SiO_2$ = 19,3 % en poids) est introduite dans le réacteur à un débit de 114 g/min pendant 45 secondes. La même solution de silicate de sodium est utilisée dans l'ensemble du procédé. Ensuite, une solution de silicate de sodium à un débit de 114 g/min et une solution d'acide sulfurique de concentration égale de 7,7 % en poids à un débit de 142 g/min sont introduites simultanément dans le réacteur pendant 14 min. Le débit de la solution d'acide sulfurique est régulé de façon à maintenir le pH du milieu réactionnel égal à 3,74. À la fin de cette étape, une solution de silicate de sodium à un débit de 115 g/min et une solution d'acide sulfurique à 96% en poids (appelé dans la suite de la description acide sulfurique 96%)) sont introduits simultanément pendant une période de 10 min. Le débit de cette solution d'acide sulfurique 96% est régulé de façon à maintenir un pH égal à 3,74.

L'introduction de l'acide sulfurique 96% est stoppée tandis que l'addition de ladite solution de silicate de sodium est poursuivie avec un débit de 114 g/min jusqu'à ce que le milieu réactionnel atteigne un pH de 8,00.

Une solution de silicate de sodium à un débit de 182 g/min et une solution d'acide sulfurique 96% sont ensuite introduites simultanément dans le milieu réactionnel pendant une période de 3 min. Le débit de la solution d'acide sulfurique 96% est régulé de sorte que le pH du milieu réactionnel soit maintenu à une valeur de 8,00.

Puis, sont ajoutées simultanément et pendant 15 min : une solution de silicate de sodium à un débit de 182 g/min, une solution d'aluminate de sodium (% massique d'Al: 11,6% - % massique de $Na_2O$: 19,9%) à un débit de 10 g/min et une solution d'acide sulfurique 96%). Le débit de la solution d'acide sulfurique 96% est régulé de sorte que le pH du milieu réactionnel soit maintenu à une valeur de 8,00.

À l'issue cette addition simultanée, le milieu réactionnel est amené à un pH=4,80 par avec de l'acide sulfurique 96%. Le mélange réactionnel est mûri pendant 5 minutes. Une suspension de silice précipitée est ainsi obtenue.

Le milieu réactionnel est filtré et lavé sur un filtre-presse. Le gâteau obtenu est délité mécaniquement. La suspension résultante est séchée au moyen d'une atomisation pour obtenir la silice précipitée S4. Les caractéristiques de la silice précipitée S4 sont indiquées dans le tableau VI.

Tableau VI : Caractéristiques des silices utilisées

| | SC1 | SC2 | SC3 | S1 | S2 | S3 | S4 |
|---|---|---|---|---|---|---|---|
| Surface spécifique CTAB ($S_{CTAB}$) en $m^2/g$ | 155 | 200 | 147 | 152 | 202 | 135 | 228 |
| Surface spécifique BET ($S_{BET}$) en $m^2/g$ | 160 | 220 | 255 | 234 | 263 | 207 | 296 |
| Différence ($S_{BET}$ - $S_{CTAB}$) en $m^2/g$ | 5 | 20 | 108 | 82 | 61 | 72 | 68 |
| Taux d'aluminium ($W_{Al}$) en % poids par rapport au poids de $SiO_2$ | 0,3 | 0,3 | 1,4 | 1,4 | 1,3 | 1,4 | 1,4 |
| Largeur de la distribution de taille d'agrégats (Ld) | 1,3 | 1,4 | 1,9 | 1,9 | 1,9 | 1,8 | 1,9 |
| Diamètre médian des agrégats (d50) en nm | 91 | 92 | 135 | 151 | 123 | 166 | 103 |
| A | 210 | 246 | 238 | 258 | 270 | 260 | 269 |

## II.2 Préparations des compositions de caoutchouc à tester

Les compositions de caoutchouc à tester sont préparées de la manière suivante : on introduit dans un mélangeur

interne, rempli à 70% et dont la température initiale de cuve est d'environ 60°C, l'élastomère diénique (ou le mélange d'élastomères diéniques, le cas échéant), puis la charge renforçante inorganique (silice à tester), l'agent de couplage de l'élastomère avec la charge renforçante inorganique, puis, après une à deux minutes de malaxage, les divers autres ingrédients à l'exception du soufre et de l'accélérateur primaire sulfénamide. On conduit alors un travail thermomécanique (phase non-productive) en une ou deux étapes (durée totale du malaxage égale à environ 5 à 7 min, l'homme du métier sait adapter cette durée totale en fonction de la matrice élastomérique de la composition), jusqu'à atteindre une température maximale de «tombée» d'environ 160-165°C. On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions sont ensuite mises en forme pour les mesures de leurs propriétés physiques ou mécaniques (par exemple sous forme d'éprouvettes de 4 mm, etc) et si besoin cuites (ou vulcanisées) pour les mesures des propriétés à cuit.

## II.3 Essai A

Cet essai a pour but de démontrer les performances améliorées d'une composition de caoutchouc conforme à l'invention à base d'une nouvelle silice par comparaison à une composition de caoutchouc classiquement utilisée et commercialisée dans les pneumatiques dit « Pneus Verts ».

Pour cela, on compare quatre compositions de caoutchouc notamment destinées à la fabrication de bandes de roulement pour pneumatique :

- les compositions témoins T1 et T2 contiennent la silice SC1,
- les compositions conformes à l'invention C1 et C2 contiennent la silice S1.

Les compositions témoins T1 et T2 sont représentatives de compositions de caoutchouc utilisées dans des pneumatiques commercialisés dit « Pneus Verts » qui sont connus pour présenter un bon compromis de performances résistance au roulement/résistance à l'usure.

La composition témoin T2 et la composition conforme à l'invention C2 diffèrent respectivement de la composition témoin T1 et de la composition conforme à l'invention C1 par la nature de l'élastomère et par le taux de charge. La matrice élastomérique des compositions T1 et C1 comprennent un élastomère diénique fonctionnalisé et celle des compositions T2 et C2 un élastomère diénique non fonctionnalisé.

Le tableau VII donne la formulation des différentes compositions, les taux étant exprimés en pce (parties en poids pour cent parties en poids d'élastomères).

Le taux de diphénylguanidine (DPG) optimal est adapté en fonction de la surface spécifique BET de la silice à tester.

En effet, plus la surface spécifique BET d'une silice est élevée, plus il est nécessaire d'utiliser un taux élevé de DPG afin de recouvrir la surface de la silice et de favoriser sa dispersion. L'homme du métier sait adapter ces taux en fonction de la nature de la silice utilisée. Les formulations peuvent être comparées.

Chaque composition T1 et C1, présente une masse volumique (ρ) égale à 1,23.

Chaque composition T2 et C2, présente une masse volumique (ρ) égale à 1,18.

Tableau VII

| Composition | T1 | C1 | T2 | C2 |
|---|---|---|---|---|
| Elastomère (1) | 100 | 100 | (-) | (-) |
| Elastomère (2) | (-) | (-) | 100 | 100 |
| Noir de carbone (3) | 3 | 3 | 3 | 3 |
| Silice SC1 | 130 | (-) | 100 | (-) |
| Silice S1 | (-) | 130 | (-) | 100 |
| Agent de couplage de l'élastomère avec la charge renforçante inorganique (4) | 10 | 10 | 8 | 8 |
| DPG (5) | 2,0 | 2,9 | 1,8 | 2,6 |
| Résine (6) | 47 | 47 | 47 | 47 |
| Plastifiant (7) | 23 | 23 | 23 | 23 |
| Cire antiozone | 2 | 2 | 2 | 2 |

(suite)

| Composition | T1 | C1 | T2 | C2 |
|---|---|---|---|---|
| Antioxydant (8) | 3 | 3 | 3 | 3 |
| Acide stéarique | 3 | 3 | 3 | 3 |
| Oxyde de zinc | 1 | 1 | 1 | 1 |
| Accélérateur (9) | 2 | 2 | 2 | 2 |
| Soufre | 1 | 1 | 1 | 1 |

(1) Elastomère : Copolymère de styrène butadiène SBR possédant une fonction amine tertiaire-alcoxysilane en milieu de chaîne et ayant une température de transition vitreuse mesurée selon la norme D3418 de 1999 égale à - 48°C. Sa microstructure déterminée par la méthode NIR est la suivante : le taux massique des motifs 1,4-trans est de 45,1%, celui des motifs 1,4-cis est de 30,5 % et celui des motifs 1,2 est de 24,4% (chacun de ces trois taux se rapporte aux unités butadiène). Le taux massique d'unité styrène est de 27% ;
(2) Elastomère : Copolymère de styrène butadiène SBR non fonctionnalisé en solution ayant une température de transition vitreuse mesurée selon la norme D3418 de 1999 égale à - 48°C. Sa microstructure déterminée par la méthode NIR est la suivante : le taux massique des motifs 1,4-trans est de 50%, celui des motifs 1,4-cis est de 26 % et celui des motifs 1,2 est de 24% (chacun de ces trois taux se rapporte aux unités butadiène). Le taux massique d'unité styrène est de 26,5% ;
(3) Noir de carbone de grade N234 commercialisé par Cabot Corporation ;
(4) Agent de couplage : Bis[3-(triéthoxysilyl)propyl] Tetrasulfide silane (TESPT) commercialisé par Evonik sous la référence « Si69 » ;
(5) DPG : diphénylguanidine commercialisée par Flexys sous la référence « Perkacit » ;
(6) Résine: Coupe C5/C9 commercialisée par Exxon sous la référence « ECR-373 »;
(7) Plastifiant : Huile de tournesol comprenant 85 % en poids d'acide oléique commercialisée par Novance sous la référence « Lubrirob Tod 1880 »
(8) Antioxydant : N-1,3-diméthylbutyl-N-phenyl-para-phénylènediamine commercialisé par Flexys sous la référence « Santoflex 6-PPD » ;
(9) Accélérateur : N-cyclohexyl-2-benzothiazyl-sulfénamide commercialisé par Flexys sous la référence « Santocure CBS ».

Les propriétés mesurées après cuisson à 150°C pendant 45 min sont reportées dans le tableau VIII.

Tableau VIII

| Composition | T1 | C1 | T2 | C2 |
|---|---|---|---|---|
| $Tan(\delta)_{max}$ à 23°C | 100 | 61 | 100 | 74 |
| Abrasion | 100 | 77 | 100 | 85 |

De manière totalement surprenante, la composition conforme à l'invention C1 présente simultanément des propriétés hystérétiques et d'abrasion significativement diminuées par rapport à la composition témoin T1.

Cette nette amélioration des propriétés hystérétiques et d'abrasion est également observée dans une autre matrice élastomérique. En effet, la composition C2 conforme à l'invention présente également des propriétés hystérétiques et d'abrasion nettement plus basses que la composition témoin T2.

En conclusion, ces résultats montrent que la nouvelle silice utilisée dans les compositions conformes à l'invention permet d'obtenir des compositions de caoutchouc présentant une nette amélioration du compromis de performances résistance au roulement/résistance à l'usure par rapport à la silice utilisée dans des compositions de caoutchouc pour des pneumatiques dits « pneus verts ».

**II.4 Essai B**

Cet essai a pour but de démontrer les performances améliorées d'une composition de caoutchouc conforme à l'invention à base d'une nouvelle silice par comparaison à une composition de caoutchouc comprenant une silice de l'art antérieur WO03/016215-A1.

Pour cela, on compare quatre compositions de caoutchouc destinées notamment à la fabrication de bandes

de roulement pour pneumatique :

- les compositions témoins T3 et T4 contiennent la silice SC2,
- les compositions conformes à l'invention C3 et C4 contiennent la silice S2.

La composition témoin T4 et la composition conforme à l'invention C4 différent respectivement de la composition témoin T3 et de la composition conforme à l'invention C3 par la nature de l'élastomère et par le taux de charge. La matrice élastomérique des compositions T3 et C3 comprennent un élastomère diénique fonctionnalisé et celle des compositions T4 et C4 un élastomère diénique non fonctionnalisé.

Le tableau IX donne la formulation des différentes compositions, les taux étant exprimés en pce (parties en poids pour cent parties en poids d'élastomères).

Le taux de diphénylguanidine (DPG) optimal est adapté en fonction de la surface spécifique BET de la silice à tester.

En effet, plus la surface spécifique BET d'une silice est élevée, plus il est nécessaire d'utiliser un taux élevé de DPG afin de recouvrir la surface de la silice et de favoriser sa dispersion. L'homme du métier sait adapter ces taux en fonction de la nature de la silice utilisée. Les formulations peuvent être comparées.

Chaque composition T3 et C3, présente une masse volumique (p) égale à 1,23.

Chaque composition T4 et C4, présente une masse volumique (p) égale à 1,18.

Tableau IX

| **Composition** | **T3** | **C3** | **T4** | **C4** |
|---|---|---|---|---|
| Elastomère (1) | 100 | 100 | (-) | (-) |
| Elastomère (2) | (-) | (-) | 100 | 100 |
| Noir de carbone (3) | 3 | 3 | 3 | 3 |
| Silice SC2 | 130 | (-) | 100 | (-) |
| Silice S2 | (-) | 130 | (-) | 100 |
| Agent de couplage élastomère/charge renforçante inorganique (4) | 13 | 13 | 10,4 | 10,4 |
| DPG (5) | 2,8 | 3,3 | 2,5 | 3,0 |
| Résine (6) | 47 | 47 | 47 | 47 |
| Plastifiant (7) | 23 | 23 | 23 | 23 |
| Cire antiozone | 2 | 2 | 2 | 2 |
| Antioxydant (8) | 3 | 3 | 3 | 3 |
| Acide stéarique | 3 | 3 | 3 | 3 |
| Oxyde de zinc | 1 | 1 | 1 | 1 |
| Accélérateur (9) | 2 | 2 | 2 | 2 |

(suite)

| Composition | T3 | C3 | T4 | C4 |
|---|---|---|---|---|
| Soufre | 1 | 1 | 1 | 1 |

(1) Elastomère : Copolymère de styrène butadiène SBR possédant une fonction amine-alcoxysilane en milieu de chaîne et ayant une température de transition vitreuse mesurée selon la norme D3418 de 1999 égale à - 48°C. Sa microstructure déterminée par la méthode NIR est la suivante : le taux massique des motifs 1,4-trans est de 45,1%, celui des motifs 1,4-cis est de 30,5 % et celui des motifs 1,2 est de 24,4% (chacun de ces trois taux se rapporte aux unités butadiène). Le taux massique d'unité styrène est de 27% ;
(2) Elastomère : Copolymère de styrène butadiène SBR non fonctionnalisé en solution ayant une température de transition vitreuse mesurée selon la norme D3418 de 1999 égale à - 48°C. Sa microstructure déterminée par la méthode NIR est la suivante : le taux massique des motifs 1,4-trans est de 50%, celui des motifs 1,4-cis est de 26 % et celui des motifs 1,2 est de 24% (chacun de ces trois taux se rapporte aux unités butadiène). Le taux massique d'unité styrène est de 26,5% ;
(3) Noir de carbone de grade N234 commercialisé par Cabot Corporation ;
(4) Agent de couplage : Bis[3-(triéthoxysilyl)propyl] Tetrasulfide silane (TESPT) commercialisé par Evonik sous la référence « Si69 » ;
(5) DPG : diphénylguanidine commercialisée par Flexys sous la référence « Perkacit » ;
(6) Résine: Coupe C5/C9 commercialisée par Exxon sous la référence « ECR-373 »;
(7) Plastifiant : Huile de tournesol comprenant 85 % en poids d'acide oléïque commercialisée par Novance sous la referenceence « Lubrirob Tod 1880 »
(8) Antioxydant : N-1,3-diméthylbutyl-N-phenyl-para-phénylènediamine commercialisé par Flexys sous la référence « Santoflex 6-PPD » ;
(9) Accélérateur : N-cyclohexyl-2-benzothiazyl-sulfénamide commercialisé par Flexys sous la référence « Santocure CBS ».

Les propriétés mesurées après cuisson à 150°C pendant 45 min sont reportées dans le tableau X.

Tableau X

| Composition | T3 | C3 | T4 | C4 |
|---|---|---|---|---|
| Tan($\delta$)$_{max}$ à 23°C | 100 | 83 | 100 | 85 |
| Abrasion | 100 | 85 | 100 | 90 |

De manière totalement surprenante, la composition conforme à l'invention C3 présente simultanément des propriétés hystérétiques et d'abrasion significativement diminuées par rapport à la composition témoin T3.

Cette nette amélioration des propriétés hystérétiques et d'abrasion est également observée dans une autre matrice élastomérique. En effet, la composition C4 conforme à l'invention présente également des propriétés hystérétiques et d'abrasion nettement plus basses que la composition témoin T4.

En conclusion, ces résultats montrent que la nouvelle silice utilisée dans les compositions conformes à l'invention permet d'obtenir des compositions de caoutchouc présentant une nette amélioration du compromis de performances résistance au roulement/résistance à l'usure par rapport à la silice utilisée dans des compositions de caoutchouc de l'art antérieur.

**II.5 Essai C**

Cet essai a pour but de démontrer les performances améliorées d'une composition de caoutchouc conformes à l'invention à base d'une nouvelle silice par comparaison à une composition de caoutchouc comprenant une silice de l'art antérieur WO03/106339-A1.

Pour cela, on compare deux compositions de caoutchouc destinées à la fabrication de bandes de roulement pour un pneumatique :

- la composition témoin T5 contient la silice SC3,
- la composition conforme à l'invention C5 contient la silice S1.

Le tableau XI donne la formulation des différentes compositions, les taux étant exprimés en pce (parties en

poids pour cent parties en poids d'élastomères).

Le taux d'agent de couplage de l'élastomère avec la charge renforçante inorganique et le taux de diphénylguanidine (DPG) sont adaptés respectivement en fonction de la surface spécifique CTAB et BET de la silice à tester. En effet, plus la surface spécifique $S_{CTAB}$ d'une silice est importante, plus le nombre de sites de liaison potentiels entre la charge renforçante inorganique et l'élastomère est important ; et donc plus la quantité dudit agent de couplage devra être importante pour favoriser les liaisons de la charge renforçante inorganique avec l'élastomère. Par ailleurs, plus la surface spécifique BET d'une silice est élevée, plus il est nécessaire d'utiliser un taux élevé de DPG afin de recouvrir la surface de la silice et de favoriser sa dispersion. L'homme du métier sait adapter ces taux en fonction de la nature de la silice utilisée. Les formulations peuvent être comparées.

Chaque compositions T5, C5 présente une masse volumique (p) est égale à 1,23.

Tableau XI

| Composition | T5 | C5 |
|---|---|---|
| Elastomère (1) | 100 | 100 |
| Noir de carbone (2) | 3 | 3 |
| Silice SC3 | 130 | (-) |
| Silice S1 | (-) | 130 |
| Agent de couplage élastomère/charge renforçante inorganique (3) | 9,5 | 9,8 |
| DPG (4) | 3,4 | 2,9 |
| Résine (5) | 47 | 47 |
| Plastifiant (6) | 23 | 23 |
| Cire antiozone | 2 | 2 |
| Antioxydant (7) | 3 | 3 |
| Acide stéarique | 3 | 3 |
| Oxyde de zinc | 1 | 1 |
| Accélérateur (8) | 2 | 2 |
| Soufre | 1 | 1 |

(1) Elastomère : Copolymère de styrène butadiène SBR possédant une fonction amine-alcoxysilane en milieu de chaîne et ayant une température de transition vitreuse mesurée selon la norme D3418 de 1999 égale à -48°C. Sa microstructure déterminée par la méthode NIR est la suivante : le taux massique des motifs 1,4-trans est de 45,1%, celui des motifs 1,4-cis est de 30,5 % et celui des motifs 1,2 est de 24,4% (chacun de ces trois taux se rapporte aux unités butadiène). Le taux massique d'unité styrène est de 27% ;
(2) Noir de carbone de grade N234 commercialisé par Cabot Corporation ;
(3) Agent de couplage : Bis[3-(triethoxysilyl)propyl] Tetrasulfide silane (TESPT) commercialisé par Evonik sous la référence « Si69 « ;
(4) DPG : diphénylguanidine commercialisée par Flexys sous la référence « Perkacit » ;
(5) Résine: Coupe C5/C9 commercialisée par Exxon sous la référence « ECR-373 »;
(6) Plastifiant : Huile de tournesol comprenant 85 % en poids d'acide oléïque commercialisée par Novance sous la reference « Lubrirob Tod 1880 »
(7) Antioxydant : N-1,3-diméthylbutyl-N-phenyl-para-phénylènediamine commercialisé par Flexys sous la référence « Santoflex 6-PPD » ;
(8) Accélérateur : N-cyclohexyl-2-benzothiazyl-sulfénamide commercialisé par Flexys sous la référence « Santocure CBS ».

Les propriétés mesurées après cuisson à 150°C pendant 45 min sont reportées dans le tableau XII.

Tableau XII

| Composition | T5 | C5 |
|---|---|---|
| $Tan(\delta)_{max}$ à 23°C | 100 | 86 |

(suite)

| Composition | T5 | C5 |
|---|---|---|
| Abrasion | 100 | 92 |

De manière totalement surprenante, la composition conforme à l'invention C5 présente simultanément des propriétés hystérétiques et d'abrasion significativement diminuées par rapport à la composition témoin T5.

On observe donc une amélioration du compromis de performances résistance au roulement/résistance à l'usure avec la composition conforme à l'invention C5 comprenant la nouvelle silice S1 à titre de charge renforçante inorganique par rapport à la composition témoin T5.

**II.6 Essai D**

Cet essai a pour but de démontrer les performances améliorées de compositions de caoutchouc conformes à l'invention à base de nouvelles silices par comparaison à une composition de caoutchouc classiquement utilisée et commercialisée dans les pneumatiques dit « Pneus Verts ».

Pour cela, on compare quatre compositions de caoutchouc destinées à la fabrication de bandes de roulement pour un pneumatique :

- la composition témoin T1 contient la silice SC1,
- les compositions conformes à l'invention C6, C7 et C8 sont des modes de réalisations de l'invention différents.

Le tableau XIII donne la formulation des différentes compositions, les taux étant exprimés en pce (parties en poids pour cent parties en poids d'élastomères).

Le taux d'agent de couplage de l'élastomère avec la charge renforçante inorganique et le taux de diphénylguanidine (DPG) sont adaptés respectivement en fonction de la surface spécifique CTAB et BET de la silice à tester. En effet, plus la surface spécifique $S_{CTAB}$ d'une silice est importante, plus le nombre de sites de liaison potentiels entre la charge renforçante inorganique et l'élastomère est important ; et donc plus la quantité dudit agent de couplage devra être importante pour favoriser les liaisons de la charge renforçante inorganique avec l'élastomère. Par ailleurs, plus la surface spécifique BET d'une silice est élevée, plus il est nécessaire d'utiliser un taux élevé de DPG afin de recouvrir la surface de la silice et de favoriser sa dispersion. L'homme du métier sait adapter ces taux en fonction de la nature de la silice utilisée. Les formulations peuvent être comparées.

Chaque compositions T1, C6, C7 et C8 présente une masse volumique (ρ) est égale à 1,23.

Tableau XIII

| Composition | T1 | C6 | C7 | C8 |
|---|---|---|---|---|
| Elastomère (1) | 100 | 100 | 100 | 100 |
| Noir de carbone (3) | 3 | 3 | 3 | 3 |
| Silice SC1 | 130 | (-) | (-) | (-) |
| Silice S3 | (-) | 130 | (-) | (-) |
| Silice S2 | (-) | (-) | 130 | (-) |
| Silice S4 | (-) | (-) | (-) | 130 |
| Agent de couplage élastomère/charge renforçante inorganique (4) | 10 | 8,7 | 13,0 | 14,7 |
| DPG (5) | 2,0 | 2,6 | 3,3 | 3,7 |
| Résine (6) | 47 | 47 | 47 | 47 |
| Plastifiant (7) | 23 | 23 | 23 | 23 |
| Cire antiozone | 2 | 2 | 2 | 2 |
| Antioxydant (8) | 3 | 3 | 3 | 3 |
| Acide stéarique | 3 | 3 | 3 | 3 |
| Oxyde de zinc | 1 | 1 | 1 | 1 |

(suite)

| Composition | T1 | C6 | C7 | C8 |
|---|---|---|---|---|
| Accélérateur (9) | 2 | 2 | 2 | 2 |
| Soufre | 1 | 1 | 1 | 1 |

(1) Elastomère : Copolymère de styrène butadiène SBR possédant une fonction amine-alcoxysilane en milieu de chaîne et ayant une température de transition vitreuse mesurée selon la norme D3418 de 1999 égale à -48°C. Sa microstructure déterminée par la méthode NIR est la suivante : le taux massique des motifs 1,4-trans est de 45,1%, celui des motifs 1,4-cis est de 30,5 % et celui des motifs 1,2 est de 24,4% (chacun de ces trois taux se rapporte aux unités butadiène). Le taux massique d'unité styrène est de 27% ;
(3) Noir de carbone de grade N234 commercialisé par Cabot Corporation ;
(4) Agent de couplage : Bis[3-(triéthoxysilyl)propyl] Tetrasulfide silane (TESPT) commercialisé par Evonik sous la référence « Si69 » ;
(5) DPG : diphénylguanidine commercialisée par Flexys sous la référence « Perkacit » ;
(6) Résine: Coupe C5/C9 commercialisée par Exxon sous la référence « ECR-373 »;
(7) Plastifiant : Huile de tournesol comprenant 85 % en poids d'acide oléique commercialisée par Novance sous la référence « Lubrirob Tod 1880 »
(8) Antioxydant : N-1,3-diméthylbutyl-N-phenyl-para-phénylènediamine commercialisé par Flexys sous la référence « Santoflex 6-PPD » ;
(9) Accélérateur : N-cyclohexyl-2-benzothiazyl-sulfénamide commercialisé par Flexys sous la référence « Santocure CBS ».

Les propriétés mesurées après cuisson à 150°C pendant 45 min sont reportées dans le tableau XIV.

Tableau XIV

| Composition | T1 | C6 | C7 | C8 |
|---|---|---|---|---|
| $Tan(\delta)_{max}$ à 23°C | 100 | 65 | 87 | 106 |
| Abrasion | 100 | 94 | 75 | 78 |

Comparées à la composition témoin T1, les compositions de l'invention C6, C7 et C8 qui comprennent des nouvelles silices de morphologie différentes présentent toutes une baisse de l'abrasion, synonyme d'une bonne résistance à l'usure.

Les compositions conformes à l'invention C6 et C7 présentent en outre de très bonnes propriétés hystérétiques comparées à la composition témoin T1.

La composition C8 présente une hystérèse qui est légèrement supérieure à celle de la composition témoin T1.Toutefois, cette légère dégradation reste acceptable pour un usage en pneumatique et le gain en abrasion de cette composition est significatif.

## Revendications

1. Composition de caoutchouc à base d'au moins un élastomère, une charge renforçante inorganique, un agent de couplage de l'élastomère avec la charge renforçante inorganique, et un système de réticulation ; ladite charge renforçante inorganique comprenant au moins une silice S présentant :

   - une surface spécifique CTAB $S_{CTAB}$ comprise dans un domaine allant de 40 à 300 $m^2/g$ ;
   - une différence entre la surface spécifique BET $S_{BET}$ et la surface spécifique CTAB $S_{CTAB}$ supérieure ou égale à 35 $m^2/g$ ;
   - un taux d'aluminium $W_{Al}$ compris dans un domaine allant de 0,5 à 7,0 % en poids par rapport au poids de la silice S;
   - une largeur de la distribution de taille d'agrégats Ld, mesurée par sédimentation centrifuge, supérieure ou égale à 1,5 ; et
   - un diamètre médian des agrégats d50, mesuré par sédimentation centrifuge, tel que pour une valeur donnée de surface spécifique CTAB $S_{CTAB}$ et un taux d'aluminium $W_{Al}$ donné, une grandeur A est définie par l'équation

(I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{Al}$] est la valeur numérique de $W_{Al}$ exprimé en % en poids par rapport au poids de la silice S; et

ladite grandeur A satisfait la relation (II) :

$$A \geq 253 \qquad (II).$$

**2.** Composition de caoutchouc selon la revendication 1, dans laquelle la relation (II) est :

$$259 \leq A \leq 300 \text{ (IIf)}.$$

**3.** Composition de caoutchouc selon l'une quelconque des revendications 1 à 2, dans laquelle le taux d'aluminium $W_{Al}$ de la silice S est compris dans un domaine allant de 0,5 à 5,0 %, plus préférentiellement de 0,8 à 3,5 %, plus préférentiellement encore de 1,0 % à 3,0 % en poids par rapport au poids de la silice S.

**4.** Composition de caoutchouc selon l'une quelconque des revendications 1 à 3, dans laquelle la largeur de la distribution de taille d'agrégats Ld, mesurée par sédimentation centrifuge, de la silice S est comprise dans un domaine allant de 1,5 à 3,5.

**5.** Composition de caoutchouc selon l'une quelconque des revendications 1 à 4, dans laquelle la différence entre la surface spécifique BET ($S_{BET}$) et la surface spécifique CTAB ($S_{CTAB}$) de la silice S est supérieure ou égale à 40 $m^2/g$, de préférence supérieure ou égale à 45 $m^2/g$, plus préférentiellement supérieure ou égale à 50 $m^2/g$, plus préférentiellement encore supérieure ou égale à 55 $m^2/g$.

**6.** Composition de caoutchouc selon l'une quelconque des revendications 1 à 5, dans laquelle la surface spécifique CTAB $S_{CTAB}$ de la silice S est comprise dans un domaine allant de 110 à 300 $m^2/g$.

**7.** Composition de caoutchouc selon l'une quelconque des revendications 1 à 6, dans laquelle la silice S présente une surface spécifique BET $S_{BET}$ supérieure ou égale à 160 $m^2/g$, de préférence supérieure ou égale à 170 $m^2/g$, plus préférentiellement supérieure ou égale à 180 $m^2/g$.

**8.** Composition de caoutchouc selon l'une quelconque des revendications 1 à 7, dans laquelle la charge renforçante inorganique comprend en outre une silice additionnelle différente de la silice S.

**9.** Composition de caoutchouc selon l'une des revendications 1 à 8, dans laquelle le taux de charge renforçante inorganique est compris dans un domaine allant de 10 à 200 pce, de préférence de 30 à 150 pce.

**10.** Composition de caoutchouc selon l'une quelconque des revendications 1 à 9, comprenant en outre une charge renforçante organique, de préférence du noir de carbone.

**11.** Composition de caoutchouc selon l'une quelconque des revendications 1 à 10, dans laquelle l'élastomère est un élastomère diénique.

**12.** Procédé de préparation d'une composition de caoutchouc telle que définie selon l'une quelconque des revendications 1 à 10, comprenant les étapes suivantes:

• on met en contact au moins un élastomère, au moins une charge renforçante inorganique, au moins un agent de couplage de l'élastomère avec la charge renforçante inorganique; ladite charge renforçante inorganique

comprenant au moins une silice S présentant :

- une surface spécifique CTAB $S_{CTAB}$ comprise dans un domaine allant de 40 à 300 $m^2/g$ ;
- une différence entre la surface spécifique BET $S_{BET}$ et la surface spécifique CTAB $S_{CTAB}$ supérieure ou égale à 35 $m^2/g$ ;
- un taux d'aluminium $W_{Al}$ compris dans un domaine allant de 0,5 à 7,0 % en poids par rapport au poids de la silice S;
- une largeur de la distribution de taille d'agrégats Ld, mesurée par sédimentation centrifuge, supérieure ou égale à 1,5 ; et
- un diamètre médian des agrégats d50, mesuré par sédimentation centrifuge, tel que pour une valeur donnée de surface spécifique CTAB $S_{CTAB}$ et un taux d'aluminium $W_{Al}$ donné, une grandeur A est définie par l'équation (I) suivante :

$$A = [d50] + 0{,}782 \times [S_{CTAB}] - 8{,}524 \times [W_{Al}] \qquad (I)$$

dans laquelle :

[d50] est la valeur numérique de d50 exprimé en nm;
[$S_{CTAB}$] est la valeur numérique de $S_{CTAB}$ exprimée en $m^2/g$ ;
[$W_{Al}$] est la valeur numérique de $W_{Al}$ exprimé en % en poids par rapport au poids de la silice S; et

ladite grandeur A satisfait la relation (II) :

$$A \geq 253 \qquad (II);$$

• on malaxe thermomécaniquement le tout en une ou plusieurs fois, jusqu'à atteindre une température maximale comprise entre 110°C et 190°C ;
• on refroidit le mélange de l'étape précédente à une température inférieure à 100°C,
• on incorpore au mélange refroidi de l'étape précédente un système de réticulation,
• on malaxe le mélange comprenant le système de réticulation jusqu'à une température maximale inférieure à 110°C.

**13.** Article semi-fini comprenant au moins une composition selon l'une quelconque des revendications 1 à 10 ou susceptible d'être obtenue par le procédé de la revendication 12.

**14.** Article semi-fini selon la revendication 13, **caractérisé en ce qu'**il est une bande de roulement pour pneumatique.

**15.** Pneumatique comprenant au moins une composition selon l'une quelconque des revendications 1 à 10 ou comprenant au moins un article semi-fini tel que défini dans la revendication 13 ou 14.

## Patentansprüche

**1.** Kautschukzusammensetzung auf Basis von mindestens einem Elastomer, einem anorganischen verstärkenden Füllstoff, einem Mittel zur Kupplung des Elastomers mit dem anorganischen verstärkenden Füllstoff und einem Vernetzungssystem; wobei der anorganische verstärkende Füllstoff mindestens eine Kieselsäure S mit

- einer spezifischen CTAB-Oberfläche $S_{CTAB}$ in einem Bereich von 40 bis 300 $m^2/g$,
- einer Differenz zwischen der spezifischen BET-Oberfläche $S_{BET}$ und der spezifischen CTAB-Oberfläche $S_{CTAB}$ größer oder gleich 35 $m^2/g$,
- einem Aluminiumgehalt $W_{Al}$ in einem Bereich von 0,5 bis 7,0 Gew.-%, bezogen auf das Gewicht der Kieselsäure S,
- einer durch Zentrifugalsedimentation gemessenen Breite der Aggregatgrößenverteilung $L_d$ größer oder gleich 1,5 und
- einem solchen durch Zentrifugalsedimentation gemessenen mittleren Aggregatdurchmesser d50, dass für einen gegebenen Wert der spezifischen CTAB-Oberfläche $S_{CTAB}$ und einen gegebenen Aluminiumgehalt $W_{Al}$

eine Größe A durch die folgende Gleichung (I) definiert ist:

$$A = [d50] + 0{,}782 \times [S_{CTAB}] - 8{,}524 \times [W_{Al}] \quad (I),$$

in der:

[d50] der numerische Wert von d50 in nm ist,
$[S_{CTAB}]$ der numerische Wert von $S_{CTAB}$ in $m^2/g$ ist,
$[W_{Al}]$ der numerische Wert von $W_{Al}$ in Gew.-%, bezogen auf das Gewicht der Kieselsäure S, ist; und

die Größe A die Beziehung (II) erfüllt:

$$A \geq 253 \quad (II),$$

umfasst.

2. Kautschukzusammensetzung nach Anspruch 1, wobei die Beziehung (II) folgendermaßen lautet:

$$259 \leq A \leq 300 \quad (IIf).$$

3. Kautschukzusammensetzung nach einem der Ansprüche 1 bis 2, wobei der Aluminiumgehalt $W_{Al}$ der Kieselsäure S in einem Bereich von 0,5 bis 5,0 Gew.-%, weiter bevorzugt von 0,8 bis 3,5 Gew.-%, noch weiter bevorzugt von 1,0 bis 3,0 Gew.-%, bezogen auf das Gewicht der Kieselsäure S, liegt.

4. Kautschukzusammensetzung nach einem der Ansprüche 1 bis 3, wobei die durch Zentrifugalsedimentation gemessene Breite der Aggregatgrößenverteilung $L_d$ der Kieselsäure S in einem Bereich von 1,5 bis 3,5 liegt.

5. Kautschukzusammensetzung nach einem der Ansprüche 1 bis 4, wobei die Differenz zwischen der spezifischen BET-Oberfläche ($S_{BET}$) und der spezifischen CTAB-Oberfläche ($S_{CTAB}$) der Kieselsäure S größer oder gleich 40 $m^2/g$, vorzugsweise größer oder gleich 45 $m^2/g$, weiter bevorzugt größer oder gleich 50 $m^2/g$, noch weiter bevorzugt größer oder gleich 55 $m^2/g$, ist.

6. Kautschukzusammensetzung nach einem der Ansprüche 1 bis 5, wobei die spezifische CTAB-Oberfläche $S_{CTAB}$ der Kieselsäure S in einem Bereich von 110 bis 300 $m^2/g$ liegt.

7. Kautschukzusammensetzung nach einem der Ansprüche 1 bis 6, wobei die Kieselsäure S eine spezifische BET-Oberfläche $S_{BET}$ größer oder gleich 160 $m^2/g$, vorzugsweise größer oder gleich 170 $m^2/g$, noch weiter bevorzugt größer oder gleich 180 $m^2/g$, aufweist.

8. Kautschukzusammensetzung nach einem der Ansprüche 1 bis 7, wobei der anorganische verstärkende Füllstoff außerdem eine zusätzliche Kieselsäure umfasst, die von der Kieselsäure S verschieden ist.

9. Kautschukzusammensetzung nach einem der Ansprüche 1 bis 8, wobei der Gehalt an anorganischem verstärkendem Füllstoff in einem Bereich von 10 bis 200 phe, vorzugsweise 30 bis 150 phe, liegt.

10. Kautschukzusammensetzung nach einem der Ansprüche 1 bis 9, die außerdem einen organischen verstärkenden Füllstoff, vorzugsweise Ruß, umfasst.

11. Kautschukzusammensetzung nach einem der Ansprüche 1 bis 10, wobei es sich bei dem Elastomer um ein Dienelastomer handelt.

12. Verfahren zur Herstellung einer Kautschukzusammensetzung gemäß einem der Ansprüche 1 bis 10, das folgende Schritte umfasst:

- man bringt mindestens ein Elastomer, mindestens einen anorganischen verstärkenden Füllstoff und mindestens ein Mittel zur Kupplung des Elastomers mit dem anorganischen verstärkenden Füllstoff in Kontakt; wobei der anorganische verstärkende Füllstoff mindestens eine Kieselsäure S mit

- einer spezifischen CTAB-Oberfläche $S_{CTAB}$ in einem Bereich von 40 bis 300 $m^2/g$,
- einer Differenz zwischen der spezifischen BET-Oberfläche $S_{BET}$ und der spezifischen CTAB-Oberfläche $S_{CTAB}$ größer oder gleich 35 $m^2/g$,
- einem Aluminiumgehalt $W_{Al}$ in einem Bereich von 0,5 bis 7,0 Gew.-%, bezogen auf das Gewicht der Kieselsäure S,
- einer durch Zentrifugalsedimentation gemessenen Breite der Aggregatgrößenverteilung $L_d$ größer oder gleich 1,5 und
- einem solchen durch Zentrifugalsedimentation gemessenen mittleren Aggregatdurchmesser d50, dass für einen gegebenen Wert der spezifischen CTAB-Oberfläche $S_{CTAB}$ und einen gegebenen Aluminiumgehalt $W_{Al}$ eine Größe A durch die folgende Gleichung (I) definiert ist:

$$A = [d50] + 0{,}782 \times [S_{CTAB}] - 8{,}524 \times [W_{Al}] \quad (I),$$

in der:

[d50] der numerische Wert von d50 in nm ist,
$[S_{CTAB}]$ der numerische Wert von $S_{CTAB}$ in $m^2/g$ ist,
$[W_{Al}]$ der numerische Wert von $W_{Al}$ in Gew.-%, bezogen auf das Gewicht der Kieselsäure S, ist; und

die Größe A die Beziehung (II) erfüllt:

$$A \geq 253 \quad (II),$$

umfasst;

• man knetet das Ganze ein- oder mehrmals thermomechanisch, bis eine Höchsttemperatur zwischen 110 °C und 190 °C erreicht ist,
• man kühlt die Mischung aus dem vorhergehenden Schritt auf eine Temperatur von weniger als 100 °C ab,
• man arbeitet in die abgekühlte Mischung aus dem vorhergehenden Schritt ein Vernetzungssystem ein,
• man knetet die Mischung, die das Vernetzungssystem enthält, bis zu einer Höchsttemperatur von weniger als 110° C.

**13.** Halbzeug, umfassend mindestens eine Zusammensetzung nach einem der Ansprüche 1 bis 10 oder eine Zusammensetzung, die durch das Verfahren nach Anspruch 12 erhältlich ist.

**14.** Halbzeug nach Anspruch 13, **dadurch gekennzeichnet, dass** es sich um eine Reifenlauffläche handelt.

**15.** Reifen umfassend mindestens eine Zusammensetzung nach einem der Ansprüche 1 bis 10 oder mindestens ein Halbzeug gemäß Anspruch 13 oder 14.

## Claims

**1.** Rubber composition based on at least one elastomer, a reinforcing inorganic filler, an agent for coupling the elastomer to the reinforcing inorganic filler, and a crosslinking system; said reinforcing inorganic filler comprising at least one silica S having:

- a CTAB specific surface area $S_{CTAB}$ within a range extending from 40 to 300 $m^2/g$;
- a difference between the BET specific surface area $S_{BET}$ and the CTAB specific surface area $S_{CTAB}$ of greater than or equal to 35 $m^2/g$;
- an aluminium content $W_{Al}$ within a range extending from 0.5 to 7.0% by weight relative to the weight of the silica S;
- a width of the aggregate size distribution Ld, measured by centrifugal sedimentation, of greater than or equal to 1.5; and

- a median aggregate diameter d50, measured by centrifugal sedimentation, such that for a given value of CTAB specific surface area $S_{CTAB}$ and a given aluminium content $W_{Al}$, a magnitude A is defined by the following equation (I):

$$A = [d50] + 0.782 \times [S_{CTAB}] - 8.524 \times [W_{Al}] \qquad (I)$$

in which:

[d50] is the numerical value of d50, expressed in nm;
$[S_{CTAB}]$ is the numerical value of $S_{CTAB}$, expressed in $m^2/g$;
$[W_{Al}]$ is the numerical value of $W_{Al}$, expressed in % by weight relative to the weight of the silica S; and

said magnitude A satisfies the relationship (II):

$$A \geq 253 \qquad (II).$$

**2.** Rubber composition according to Claim 1, wherein the relationship (II) is:

$$259 \leq A \leq 300 \text{ (IIf)}.$$

**3.** Rubber composition according to either one of Claims 1 and 2, wherein the aluminium content $W_{Al}$ of the silica S is within a range extending from 0.5 to 5.0%, more preferentially from 0.8 to 3.5%, more preferentially still from 1.0% to 3.0% by weight relative to the weight of the silica S.

**4.** Rubber composition according to any one of Claims 1 to 3, wherein the width of the aggregate size distribution Ld, measured by centrifugal sedimentation, of the silica S is within a range extending from 1.5 to 3.5.

**5.** Rubber composition according to any one of Claims 1 to 4, wherein the difference between the BET specific surface area ($S_{BET}$) and the CTAB specific surface area ($S_{CTAB}$) of the silica S is greater than or equal to 40 $m^2/g$, preferably greater than or equal to 45 $m^2/g$, more preferentially greater than or equal to 50 $m^2/g$, more preferentially still greater than or equal to 55 $m^2/g$.

**6.** Rubber composition according to any one of Claims 1 to 5, wherein the CTAB specific surface area $S_{CTAB}$ of the silica S is within a range extending from 110 to 300 $m^2/g$.

**7.** Rubber composition according to any one of Claims 1 to 6, wherein the silica S has a BET specific surface area $S_{BET}$ of greater than or equal to 160 $m^2/g$, preferably greater than or equal to 170 $m^2/g$, more preferentially greater than or equal to 180 $m^2/g$.

**8.** Rubber composition according to any one of Claims 1 to 7, wherein the reinforcing inorganic filler also comprises an additional silica other than the silica S.

**9.** Rubber composition according to one of Claims 1 to 8, wherein the content of reinforcing inorganic filler is within a range extending from 10 to 200 phr, preferably from 30 to 150 phr.

**10.** Rubber composition according to any one of Claims 1 to 9, also comprising a reinforcing organic filler, preferably carbon black.

**11.** Rubber composition according to any one of Claims 1 to 10, wherein the elastomer is a diene elastomer.

**12.** Process for preparing a rubber composition as defined according to any one of Claims 1 to 10, comprising the following steps:

• at least one elastomer, at least one reinforcing inorganic filler and at least one agent for coupling the elastomer to the reinforcing inorganic filler are brought into contact; said reinforcing inorganic filler comprising at least one

silica S having:

- a CTAB specific surface area $S_{CTAB}$ within a range extending from 40 to 300 $m^2/g$;
- a difference between the BET specific surface area $S_{BET}$ and the CTAB specific surface area $S_{CTAB}$ of greater than or equal to 35 $m^2/g$;
- an aluminium content $W_{Al}$ within a range extending from 0.5 to 7.0% by weight relative to the weight of the silica S;
- a width of the aggregate size distribution Ld, measured by centrifugal sedimentation, of greater than or equal to 1.5; and
- a median aggregate diameter d50, measured by centrifugal sedimentation, such that for a given value of CTAB specific surface area $S_{CTAB}$ and a given aluminium content $W_{Al}$, a magnitude A is defined by the following equation (I):

$$A = [d50] + 0.782 \times [S_{CTAB}] - 8.524 \times [W_{Al}] \qquad (I)$$

in which:

[d50] is the numerical value of d50, expressed in nm;
$[S_{CTAB}]$ is the numerical value of $S_{CTAB}$, expressed in $m^2/g$;
$[W_{Al}]$ is the numerical value of $W_{Al}$, expressed in % by weight relative to the weight of the silica S; and

said magnitude A satisfies the relationship (II):

$$A \geq 253 \qquad (II);$$

• everything is kneaded thermomechanically, once or several times, until a maximum temperature of between 110°C and 190°C is reached;
• the mixture from the preceding step is cooled to a temperature below 100°C,
• a crosslinking system is incorporated into the cooled mixture from the preceding step,
• the mixture comprising the crosslinking system is kneaded up to a maximum temperature below 110°C.

**13.** Semi-finished article, comprising at least one composition according to any one of Claims 1 to 10 or capable of being obtained by the process of Claim 12.

**14.** Semi-finished article according to Claim 13, **characterized in that** it is a tyre tread.

**15.** Tyre comprising at least one composition according to any one of Claims 1 to 10 or comprising at least one semi-finished article as defined in Claim 13 or 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0501227 A
- EP 0692492 A
- EP 0692493 A
- EP 0735088 A
- EP 0767206 A
- EP 0786493 A
- EP 0881252 A
- WO 9902590 A
- WO 9902601 A
- WO 9902602 A
- WO 9906480 A
- WO 0005300 A
- WO 0005301 A
- WO 03016387 A
- FR 2740778
- US 6013718 A
- WO 2008141702 A
- FR 2765882
- WO 0192402 A
- WO 200409686 A
- EP 1127909 A
- US 6503973 B
- WO 2009000750 A
- WO 2009000752 A
- EP 0778311 A
- WO 03016215 A
- WO 9928376 A
- WO 0073372 A
- WO 02053634 A
- WO 2004003067 A
- WO 2004056915 A
- EP 0810258 A
- WO 2013190063 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- WO 02083782 A
- WO 03002648 A
- US 2005016651 A
- WO 03002649 A
- US 2005016650 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 200798120 A
- EP 1994038 A
- EP 2079793 A
- WO 2010072685 A
- WO 2008055986 A
- WO 2007017060 A
- WO 2007003408 A
- WO 2009062733 A
- EP 0784072 A
- WO 9736724 A
- WO 9916600 A
- WO 2006069792 A
- WO 2006069793 A
- WO 2008003434 A
- WO 2008003435 A
- WO 0210269 A
- EP 0520862 A1
- WO 03016215 A1
- WO 03106339 A1

**Littérature non-brevet citée dans la description**


- *The Journal of the American Chemical Society,* Février 1938, vol. 60, 309
- **J. S. TAUROZZI ; V. A. HACKLEY ; M. R. WIESNER.** Préparation of Nanoparticle Dispersions from Powdered Material Using Ultrasonic Disruption. National Institute of Standards and Technology Special Publication, Juin 2012, 1200-2
- **VILMIN, F. ; DUSSAP, C. ; COSTE, N.** *Applied Spectroscopy,* 2006, vol. 60, 619-29